(19) Europäisches Patentamt
European Patent Office
Office européen des brevets

(11) **EP 3 875 551 B1**

(12) **EUROPEAN PATENT SPECIFICATION**

(45) Date of publication and mention
of the grant of the patent:
**27.12.2023 Bulletin 2023/52**

(21) Application number: **19880649.9**

(22) Date of filing: **18.10.2019**

(51) International Patent Classification (IPC):
*C09D 11/023* (2014.01)    *B41M 1/30* (2006.01)
*C09D 11/033* (2014.01)    *C09D 11/03* (2014.01)
*C09D 11/102* (2014.01)    *C09D 11/037* (2014.01)
*C09D 11/107* (2014.01)

(52) Cooperative Patent Classification (CPC):
**C09D 11/037; C09D 11/03; C09D 11/033;
C09D 11/102; C09D 11/107**

(86) International application number:
**PCT/JP2019/041128**

(87) International publication number:
**WO 2020/090524 (07.05.2020 Gazette 2020/19)**

(54) **AQUEOUS INK FOR PLATE PRINTING**

WÄSSRIGE TINTE FÜR PLATTENDRUCK

ENCRE AQUEUSE POUR IMPRESSION À LA PLAQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2018 JP 2018203871**

(43) Date of publication of application:
**08.09.2021 Bulletin 2021/36**

(73) Proprietor: **Kao Corporation
Chuo-ku,
Tokyo 103-8210 (JP)**

(72) Inventors:
• **OZAKI, Yuki**
**Wakayama-shi, Wakayama 640-8580 (JP)**
• **UEDA, Yasufumi**
**Wakayama-shi, Wakayama 640-8580 (JP)**
• **MIZUSHIMA, Ryuma**
**Wakayama-shi, Wakayama 640-8580 (JP)**
• **MATSUZONO, Takuto**
**Wakayama-shi, Wakayama 640-8580 (JP)**

(74) Representative: **Hoffmann Eitle
Patent- und Rechtsanwälte PartmbB
Arabellastraße 30
81925 München (DE)**

(56) References cited:
WO-A1-2016/181797    WO-A1-2018/030485
WO-A1-2018/173901    JP-A- S5 385 606
JP-A- 2013 166 364    JP-A- 2015 196 789
JP-A- 2016 210 959    JP-A- 2018 083 938

**Description**

FIELD OF THE INVENTION

The present invention relates to an aqueous ink for plate-based printing, and a plate-based printing method using the aqueous ink.

BACKGROUND OF THE INVENTION

Gravure printing, flexographic printing, typographic printing, etc., using a printing plate such as an intaglio printing plate, a lithographic printing plate, a letterpress printing plate, etc., are capable of controlling printing quality by varying a configuration of the printing plate to realize high-definition printing, and therefore have been used in extensive applications.

Hitherto, an oil-based ink has been frequently used for plate-based printing such as gravure printing, etc. However, the oil-based ink has posed the problems concerning working environments, global environments, disaster prevention, etc., as well as residual solvents when used in food-related applications, etc. In addition, the gravure printing in which a large amount of the oil-based ink is used has such a problem as to hardly meet market needs of production of many kinds but a small lot of printed materials.

For this reason, there has been noticed plate-based printing using an aqueous ink. However, the aqueous ink tends to be deteriorated in drying properties or wettability to a surface of a printing plate owing to a surface tension thereof, so that there tends to occur problems such as poor transfer of the ink, etc. Thus, there tends to occur such a problem that the aqueous ink is incapable of providing a high-quality printed material.

In addition, with the progress of packaging industries, use of a soft packaging material as a printing medium has proceeded. As the soft packaging material, there have been mainly used resin films such as a polyethylene terephthalate (PET) film, a polypropylene (PP) film, etc. However, if any flaws or delamination are present on characters or images printed on the packaging material, the commercial value of goods packaged therewith tends to be deteriorated. Therefore, it has been required that the printed characters or images exhibit high adhesion properties to a substrate such as a film, etc., (hereinafter also referred to merely as "substrate adhesion properties").

JP 2016-44282A (Patent Literature 1) discloses an aqueous printing ink composition for gravure printing which has good printability such as leveling properties, trapping properties, etc., against an impermeable plastic film substrate, and contains a polyurethane-based resin, an acetylene glycol-based compound and 10% by weight or less of propylene glycol ether. In Examples of the Patent Literature 1, it is described that after milling a carbon black, a polyurethane resin, n-propyl alcohol and water while stirring, the milled product was mixed with a polyurethane resin solution, water, propylene glycol monomethyl ether, etc., to thereby obtain a black printing ink, followed by controlling a viscosity of the resulting ink with a mixed solvent to thereby prepare a dilute ink. It is also described that the polyurethane resin was obtained by neutralizing a solvent-type polyurethane resin solution with aqueous ammonia to render the resin water-soluble, and then removing the solvent from the resulting solution by distillation.

WO 2017/47267A (Patent Literature 2) discloses an aqueous gravure ink that has a less burden on environments and is capable of conducting high-definition printing, and contains a pigment, a polymer, a water-soluble organic solvent, a surfactant and water, in which the water-soluble organic solvent has a boiling point of from 100 to 260°C, a content of the water-soluble organic solvent in the ink is from 10 to 35% by mass, and a content of water in the ink is from 50 to 70% by mass. In Examples of the Patent Literature 2, it is described that pigment-containing crosslinked polymer particles were neutralized with sodium hydroxide, and then further compounded with water-insoluble polymer particles, diethylene glycol monoisobutyl ether, etc., to prepare an ink. In addition, it is also described that the pigment-containing crosslinked polymer particles were obtained by adding water, sodium hydroxide and an aqueous ammonia solution to a methyl ethyl ketone (MEK) solution of the water-insoluble polymer and then further adding carbon black thereto, subjecting the resulting mixture to dispersion treatment, removing MEK from the obtained dispersion by distillation, and further subjecting the dispersion to crosslinking treatment with trimethylolpropane polyglycidyl ether.

JP 2016-210959 A describes a water-based ink including pigment-containing water-insoluble polymer particles A, water-insoluble vinyl-based polymer particles B and an organic solvent C, in which the water-insoluble polymer particles A are obtained by crosslinking polymer particles; the water-soluble particles B include at least one material selected from the group consisting of water-insoluble vinyl-based polymer particles and the like; the organic solvent C includes at least one compound selected from the group consisting of diethylene glycol monobutyl ether and diethylene glycol monoisobutyl ether, and propylene glycol, in which a total content of diethylene glycol monobutyl ether and diethylene glycol monoisobutyl ether in the water-based ink is not less than 0.8% by mass, and a content of an organic solvent having a boiling point of higher than 250°C in the water-based ink is not more than 5% by mass; and a content of water in the water-based ink is not less than 45% by mass.

JP 2018-083938 A relates to an aqueous gravure ink containing a pigment, a polymer, a water-soluble organic solvent, a surfactant and water, in which the water-soluble organic solvent contains a glycol ether having a boiling point of from 100 to 260°C, and a content of the glycol ether in the ink is from 1 to 10% by mass; a total content of the water-soluble organic solvent in the ink is not more than 15% by mass; the surfactant contains an acetylene glycol-based surfactant; and a content of water in the ink is from 50 to 70% by mass.

WO 2018/173901 A1 describes a pigment, the surface of which has been coated with a resin, wherein the resin is an $\alpha$-olefin copolymer having an acid group and the amount of the resin with which the pigment has been coated is 10-50 parts by mass per 100 parts by mass of the uncoated pigment (X).

JP S 5385606 A concerns a polymerizable monomer mixture dissolved in an alcohol containing 5 to 20 parts by weight of an aqueous coating agent unsaturated carboxylic acid.

JP 2013-166364 A describes an ink forming method includes an ink application step of applying a water-based ink containing polymer particles, an amine compound having at least one hydroxyl group, a colorant, and water, onto a recording substrate having ink non-absorbency or low ink-absorbency.

JP 2015-196789 A relates to a printing ink composition comprising an amine compound (a) that is a tertiary amine containing an alkyl group having 8 to 18 carbon atoms and having ethylene oxide added thereto.

## SUMMARY OF THE INVENTION

The present invention relates to an aqueous ink for plate-based printing, containing pigment-containing crosslinked water-insoluble polymer particles A, pigment-free water-insoluble polymer particles B, an organic amine compound, not less than 1% by mass and not more than 30% by mass of a water-soluble organic solvent having a boiling point of not lower than 100°C and not higher than 260°C, and water, and wherein the organic amine compound is at least a trialkylamine having not less than 3 and not more than 8 carbon atoms.

## DETAILED DESCRIPTION OF THE INVENTION

In the conventional aqueous inks for plate-based printing described in the Patent Literatures 1 and 2, etc., it has been required to further improve transfer properties and substrate adhesion properties of the inks against a low-liquid absorbing printing medium.

The present invention relates to an aqueous ink for plate-based printing which is excellent in transfer properties and substrate adhesion properties even when printed onto a low-liquid absorbing printing medium, and a plate-based printing method using the aqueous ink.

The present inventors have found that the aforementioned conventional problems can be solved by an aqueous ink in which pigment-containing crosslinked water-insoluble polymer particles are used as a colorant, pigment-free water-insoluble polymer particles are used as a fixing agent, an organic amine compound is used as a neutralizing agent for the polymers, and a water-soluble organic solvent having a specific boiling point is compound in an amount of not less than 1% by mass and not more than 30% by mass.

That is, the present invention relates to the following aspects [1] and [2].

[1] An aqueous ink for plate-based printing, containing pigment-containing crosslinked water-insoluble polymer particles A, pigment-free water-insoluble polymer particles B, an organic amine compound, not less than 1% by mass and not more than 30% by mass of a water-soluble organic solvent having a boiling point of not lower than 100°C and not higher than 260°C, and water, and wherein the organic amine compound is at least a trialkylamine having not less than 3 and not more than 8 carbon atoms.

[2] A plate-based printing method including the step of printing characters or images on a low-liquid absorbing printing medium using the aqueous ink according to the above aspect [1].

In accordance with the present invention, it is possible to provide an aqueous ink for plate-based printing which is excellent in transfer properties and substrate adhesion properties even when printed onto a low-liquid absorbing printing medium, and a plate-based printing method using the aqueous ink.

[Aqueous Ink for Plate-Based Printing]

The aqueous ink for plate-based printing according to the present invention (hereinafter also referred to merely as an "ink") contains crosslinked water-insoluble polymer particles A containing a pigment (hereinafter also referred to merely as "pigment-containing crosslinked polymer particles A"), pigment-free water-insoluble polymer particles B (hereinafter also referred to merely as "polymer particles B"), an organic amine compound, not less than 1% by mass and not more than 30% by mass of a water-soluble organic solvent having a boiling point of not lower than 100°C and not higher than 260°C, and water, and wherein the organic amine compound is at least a trialkylamine having not less than 3 and not more than 8 carbon atoms.

Meanwhile, the term "aqueous" as used herein means that water has a largest content among components of a medium contained in the aqueous ink.

The term "low-liquid absorbing" as used herein means a concept including both of low-liquid absorbing properties and non-liquid absorbing properties of a printing medium against the aqueous ink. The "low-liquid absorbing" properties may be evaluated by absorption of pure water to the printing medium. More specifically, the "low-liquid absorbing" means that the water absorption per a unit surface area of the printing medium as measured by contacting the printing medium with pure water for 100 milliseconds is not less than 0 $g/m^2$ and not more than 10 $g/m^2$. The water absorption of the printing medium may be measured using an automatic scanning absorptometer.

The term "printing" as used herein means a concept that includes printing or typing operation for printing characters or images.

The meaning of the term "waster-insoluble" is described hereinlater as to the below-explained polymers.

The aqueous ink for plate-based printing according to the present invention is excellent in transfer properties and substrate adhesion properties even when printed on a low-liquid absorbing printing medium. The reason why the aforementioned advantageous effects can be attained by the present invention is considered as follows, though it is not clearly determined yet. That is, in the present invention, the pigment is contained in the aqueous ink in the form of the pigment-containing crosslinked water-insoluble polymer particles A in which the polymer is crosslinked with a crosslinking agent. For this reason, the polymer is firmly adsorbed and fixed onto the surface of the pigment.

It is considered that since the ink of the present invention contains the water-soluble organic solvent having a boiling point of not lower than 100°C and not higher than 260°C in an amount of not less than 1% by mass and not more than 30% by mass, it is possible to suppress drying of the ink and improve the transfer properties of the ink to a printing medium. In addition, it is considered that since the pigment-containing crosslinked polymer particles A have a crosslinked structure, the polymer can be prevented from swelling even when evaporating water from the ink on a printing plate, and furthermore since the ink is capable of maintaining a low viscosity owing to electric repulsion by the organic amine compound, it is possible to maintain a still higher transfer rate of the ink and further improve transfer properties of the ink.

The pigment-containing crosslinked polymer particles A are excellent in dispersion stability in the ink, and are allowed to sufficiently spread together with the pigment-free polymer particles B over the low-liquid absorbing printing medium when printed thereon, so that the surface of the printing medium is coated therewith. In this case, the organic amine compound is partially or wholly volatilized from the printing medium after the ink is printed thereon. It is considered that when the organic amine compound is volatilized, the surfaces of the polymer particles A and B are rendered hydrophobic to thereby enhance affinity to a hydrophobic surface of the low-liquid absorbing printing medium, so that adhesion between the printed characters or images and the printing medium can be improved.

In addition, it is considered that since the pigment-containing crosslinked polymer particles A can be prevented from being dispersed in water on the printing medium, flocculation of the particles A is accelerated to form a firm coating film thereof, so that it is possible to improve adhesion between the printed characters or images and the printing medium. Furthermore, it is considered that the water-soluble organic solvent contained in the ink contributes to increase in wettability of the ink against the low-liquid absorbing printing medium.

Owing to the synergistic effect of these properties, it is considered that the aqueous ink for plate-based printing according to the present invention is excellent in transfer properties, and also excellent in substrate adhesion properties after being transferred.

<Pigment-Containing Crosslinked Water-Insoluble Polymer Particles A>

The pigment used in the present invention is contained in the ink in the form of the pigment-containing crosslinked water-insoluble polymer particles A (pigment-containing crosslinked polymer particles A).

The pigment-containing crosslinked polymer particles A are formed by crosslinking polymer particles A1 containing the pigment (hereinafter also referred to merely as "pigment-containing polymer particles A1"). Specifically, the pigment-containing crosslinked polymer particles A may be obtained by preparing a water dispersion of the pigment-containing polymer particles A1 and then crosslinking the polymer for dispersing the pigment in the water dispersion, with a crosslinking agent.

As the crosslinking agent, there may be mentioned compounds containing two or more functional groups that are capable of reacting with a functional group of the pigment-containing polymer particles A1.

(Pigment)

The pigment used in the present invention may be either an inorganic pigment and an organic pigment.

Examples of the inorganic pigment include carbon blacks, metal oxides and the like. The carbon blacks are preferably used for black inks. Examples of the carbon blacks include furnace blacks, thermal lamp blacks, acetylene blacks, channel blacks and the like. As a pigment for white inks, there may be used metal oxides such as titanium dioxide, zinc oxide, silica, alumina, magnesium oxide, etc., and the like. These inorganic pigments may be subjected to surface treatments with conventionally known hydrophobilizing agents such as a titanium coupling agent, a silane coupling agent, a higher fatty acid metal salt, etc.

Examples of the organic pigment include azo pigments such as azo lake pigments, insoluble monoazo pigments, insoluble disazo pigments, chelate azo pigments, etc.; polycyclic pigments such as phthalocyanine pigments, perylene pigments, perinone pigments, anthraquinone pigments, quinacridone pigments, dioxazine pigments, thioindigo pigments, isoindolinone pigments, quinophthalone pigments, diketopyrrolopyrrole pigments, benzimidazolone pigments, threne pigments, etc.; and the like.

The hue of the pigment is not particularly limited. In chromatic inks, there may be used any chromatic pigment having a yellow color, a magenta color, a cyan color, a red color, a blue color, an orange color, a green color, etc.

Specific examples of the preferred organic pigments include at least one pigment selected from the group consisting of C.I. Pigment Yellow 13, 17, 74, 83, 93, 97, 109, 110, 120, 128, 139, 151, 154, 155, 174 and 180; C.I. Pigment Red 48, 57:1, 122, 146, 150, 176, 184, 185, 188, 202 and 254; C.I. Pigment Orange; C.I. Pigment Violet 19 and 23; C.I. Pigment Blue 15, 15:1, 15:2, 15:3, 154, 16 and 60; C.I. Pigment Green 7 and 36; and the like.

The aforementioned pigments may be used alone or in the form of a mixture of any two or more thereof.

<Polymer a1 Constituting Pigment-Containing Polymer Particles A1>

The polymer a1 constituting the pigment-containing polymer particles A1 (hereinafter also referred to merely as a "polymer a1") is not particularly limited as long as the polymer is capable of exhibiting at least an ability of dispersing the pigment. The polymer a1 constituting the pigment-containing polymer particles A1 is crosslinked with a crosslinking agent and thereby transformed into a water-insoluble crosslinked polymer a2 (hereinafter also referred to merely as a "polymer a2"). The polymer a1 as an uncrosslinked polymer before being crosslinked may be either a water-soluble polymer or a water-insoluble polymer, but is transformed into a water-insoluble polymer by crosslinking reaction thereof.

The term "water-insoluble" of the polymer a1 as used in the present invention means that when the polymer is dried to a constant weight at 105°C for 2 hours and then dissolved in 100 g of water at 25°C, the solubility in water of the polymer is not more than 10 g. The solubility in water of the polymer a1 is preferably not more than 5 g and more preferably not more than 1 g. In the case where the polymer a1 is in the form of an anionic polymer, the aforementioned solubility means a solubility of the polymer whose anionic groups are neutralized completely (i.e., 100%) with sodium hydroxide. In the case where the polymer a1 is in the form of a cationic polymer, the aforementioned solubility means a solubility of the polymer whose cationic groups are neutralized completely (i.e., 100%) with hydrochloric acid.

The uncrosslinked polymer a1 before the crosslinking reaction is crosslinked and transformed into the polymer a2. The configuration of the polymer a2 in the resulting ink is preferably a pigment-enclosing configuration in which the pigment is incorporated in the polymer a2, from the viewpoint of improving dispersion stability of the pigment.

The polymer a1 preferably contains an ionic group from the viewpoint of improving dispersion stability of the pigment and storage stability of the resulting ink. The ionic group is preferably an acid group, and more preferably a group that is capable of releasing hydrogen ions upon dissociation thereof to allow the resin to exhibit acidity, such as a carboxy group ($-COOM$), a sulfonic acid group ($-SO_3M$), a phosphoric acid group ($-OPO_3Ms$), etc., or dissociated ion forms of these groups (such as $-COO^-$, $-SO_3^-$, $-OPO_3^{2-}$ and $-OPO_3-M$), and the like. In the aforementioned chemical formulae, M is a hydrogen atom, an alkali metal, ammonium or an organic ammonium. Of these groups, from the viewpoint of improving dispersion stability of the pigment and storage stability of the resulting ink, preferred is a carboxy group ($-COOM$).

The ionic group contained in a molecule of the polymer a1 is preferably introduced into a polymer skeleton thereof by an ionic monomer (a-1). More specifically, it is preferred that the polymer a1 contains a constitutional unit derived from the ionic monomer (a-1). Examples of the polymer a1 include a vinyl-based resin, a polyester-based resin, a polyurethane-based resin and the like. Among these resins, preferred is the vinyl-based resin.

In addition, the polymer a1 is preferably such a vinyl-based resin that is produced by copolymerizing a raw material monomer (a) containing an ionic monomer (a-1) (hereinafter also referred to merely as a "component (a-1)") and a hydrophobic monomer (a-2) (hereinafter also referred to merely as a "component (a-2)") (such a raw material monomer is hereinafter also referred to merely as a "raw material monomer (a)").

The vinyl-based resin preferably contains a constitutional unit derived from the component (a-1) and a constitutional unit derived from the component (a-2). The vinyl-based resin may further contain a constitutional unit derived from a nonionic monomer (a-3) (hereinafter also referred to merely as a "component (a-3)").

[Ionic Monomer (a-1)]

The ionic monomer (a-1) is preferably an anionic monomer. Examples of the anionic monomer include a carboxylic acid monomer, a sulfonic acid monomer and the like. Among these ionic monomers, more preferred is the carboxylic acid monomer.

Examples of the carboxylic acid monomer include at least one monomer selected from the group consisting of (meth)acrylic acid, crotonic acid, itaconic acid, maleic acid, fumaric acid, citraconic acid and 2-methacryloyloxymethylsuccinic acid. Among these monomers, preferred is (meth)acrylic acid.

The term "(meth)acrylic acid" as used in the present specification means at least one compound selected from the group consisting of acrylic acid and methacrylic acid, and the term "(meth)acrylate" as used in the present specification means at least one compound selected from the group consisting of an acrylate and a methacrylate.

[Hydrophobic Monomer (a-2)]

The term "hydrophobic" of the hydrophobic monomer (a-2) as used in the present invention means that a solubility in water of the monomer as measured by dissolving the monomer in 100 g of ion-exchanged water at 25°C until reaching a saturation concentration thereof is less than 10 g. The solubility in water of the hydrophobic monomer (a-2) is preferably not more than 5 g and more preferably not more than 1 g from the viewpoint of improving substrate adhesion properties of the pigment in the resulting ink.

As the hydrophobic monomer (a-2), there may be mentioned an alkyl (meth)acrylate, an aromatic group-containing monomer, a macromonomer containing a polymerizable functional group at one terminal end thereof, and the like.

As the alkyl (meth)acrylate, there are preferably used those alkyl (meth)acrylates containing an alkyl group having not less than 6 and not more than 18 carbon atoms. Examples of the alkyl (meth)acrylates include methyl (meth)acrylate, ethyl (meth)acrylate, (iso)propyl (meth)acrylate, (*iso-* or *tertiary-*)butyl (meth)acrylate, cyclohexyl (meth)acrylate, 2-ethylhexyl (meth)acrylate, (iso)octyl (meth)acrylate, and the like.

The aromatic group-containing monomer is preferably a vinyl-based monomer containing an aromatic group having not less than 6 and not more than 22 carbon atoms, and more preferably a styrene-based monomer, an aromatic group-containing (meth)acrylate, etc.

As the styrene-based monomer, there may be mentioned styrene, 2-methyl styrene, *α*-methyl styrene, vinyl toluene, divinyl benzene and the like. As the aromatic group-containing (meth)acrylate, there may be mentioned benzyl (meth)acrylate, phenoxyethyl (meth)acrylate and the like. Among these styrene-based monomers, preferred is at least one monomer selected from the group consisting of styrene, *α*-methyl styrene and benzyl (meth) acrylate.

[Nonionic Monomer (a-3)]

The nonionic monomer (a-3) is a monomer having high affinity to water or a water-soluble organic solvent. As the nonionic monomer (a-3), preferred are a polyalkylene glycol (meth)acrylate and an alkoxy polyalkylene glycol (meth)acrylate, and more preferred is methoxy polyethylene glycol (n = 1 to 30) (meth)acrylate.

Specific examples of commercially available products of the nonionic monomer (a-3) include "NK ESTER M" series products available from Shin-Nakamura Chemical Co., Ltd.; and "BLEMMER PE" series products, "BLEMMER PME" series products, "BLEMMER 50PEP" series products, "BLEMMER 50POEP" series products all available from NOF Corporation; and the like.

(Contents of Respective Components in Raw Material Monomer (a) or Contents of Respective Constitutional Units in Vinyl-Based Resin)

The contents of the component (a-1), the component (a-2) and the component (a-3) in the raw matrial monomer (a) (contents of non-neutralized components; hereinafter defined in the same way) upon production of the vinyl-based resin, or the contents of the constitutional unit derived from the component (a-1), the constitutional unit derived from the component (a-2) and the constitutional unit derived from the component (a-3) in the vinyl-based resin are as follows, from the viewpoint of improving dispersion stability of the pigment.

The content of the component (a-1) is preferably not less than 5% by mass, more preferably not less than 10% by mass and even more preferably not less than 15% by mass, and is also preferably not more than 45% by mass, more preferably not more than 40% by mass and even more preferably not more than 35% by mass.

The content of the component (a-2) is preferably not less than 30% by mass, more preferably not less than 40% by mass and even more preferably not less than 50% by mass, and is also preferably not more than 95% by mass, more preferably not more than 90% by mass and even more preferably not more than 85% by mass.

The content of the component (a-3) is not less than 0% by mass. In the case where the component (a-3) is included, the content of the component (a-3) is preferably not less than 1% by mass, and is also preferably not more than 20% by mass and more preferably not more than 10% by mass.

(Production of Vinyl-Based Resin)

The vinyl-based resin may be produced by copolymerizing a monomer mixture containing the raw material monomer (a) by a conventionally known solution polymerization method, etc.

The preferred polymerization conditions may vary depending upon the kinds of polymerization initiators, monomers and solvents used, etc. In general, the polymerization temperature is preferably not lower than 30°C and more preferably not lower than 50°C, and is also preferably not higher than 95°C and more preferably not higher than 80°C. The polymerization time is preferably not less than 1 hour and more preferably not less than 2 hours, and is also preferably not more than 20 hours and more preferably not more than 10 hours. Also, the polymerization is preferably conducted in a nitrogen gas atmosphere or an atmosphere of an inert gas such as argon, etc.

The weight-average molecular weight of the vinyl-based resin is preferably not less than 5,000, more preferably not less than 8,000 and even more preferably not less than 10,000, and is also preferably not more than 100,000, more preferably not more than 50,000 and even more preferably not more than 30,000, from the viewpoint of improving adsorptivity to the pigment and dispersion stability of the pigment.

The acid value of the vinyl-based resin is preferably not less than 100 mgKOH/g, more preferably not less than 150 mgKOH/g and even more preferably not less than 200 mgKOH/g, and is also preferably not more than 350 mgKOH/g, more preferably not more than 300 mgKOH/g and even more preferably not more than 270 mgKOH/g, from the viewpoint of improving dispersibility of the pigment and adsorptivity of the polymer thereto.

Meanwhile, the weight-average molecular weight and the acid value of the vinyl-based resin may be measured by the methods described in Examples below.

[Production of Pigment-Containing Crosslinked Polymer Particles A]

The pigment-containing crosslinked polymer particles A are in the form of particles formed by adsorbing the crosslinked polymer a2 onto the surface of the pigment, so that the pigment can be stably dispersed in the ink.

The pigment-containing crosslinked polymer particles A are preferably produced in the form of a pigment water dispersion thereof by a process including the following steps 1 to 3 from the viewpoint of efficiently producing the polymer particles. However, in the case where no organic solvent is used in the step 1, the step 2 (organic solvent removal step) may be omitted.

The step 3 (crosslinking step) is an optional step. The crosslinking agent may be added in the step 1 to form a crosslinked structure on a surface layer portion of the respective surface pigment-containing polymer particles A1 simultaneously with coating the pigment with the polymer.

Step 1: subjecting a pigment mixture containing the pigment, the polymer a1, an organic solvent and water to dispersion treatment to obtain a dispersion treatment product;

Step 2: removing the organic solvent from the dispersion treatment product obtained in the step 1 to obtain a water dispersion of the pigment-containing polymer particles A1 (hereinafter also referred to merely as a "pigment water dispersion (i)"); and

Step 3: adding a crosslinking agent to the pigment water dispersion (i) obtained in the step 2 to subject the pigment-containing polymer particles A1 to crosslinking reaction, thereby obtaining a water dispersion (I) of the pigment-containing crosslinked polymer particles A (hereinafter also referred to merely as a "pigment water dispersion (I)").

(Step 1)

The pigment mixture used in the step 1 is preferably obtained by the method in which the polymer a1 is first dissolved or dispersed in an organic solvent or water, and then the pigment and water are added and mixed, if required together with a neutralizing agent, a surfactant, etc., into the resulting solution or dispersion to prepare a dispersion liquid of an oil-in-water type.

In the case where the polymer a1 contains acid groups, it is preferred that the acid groups are at least partially neutralized using a neutralizing agent. It is considered that by neutralizing the acid groups, electric repulsion force between the pigment particles which is exhibited after the neutralization tends to become large, so that it is possible to suppress flocculation of the pigment particles in the aqueous ink, prevent increase in viscosity of the ink, and improve dispersion stability of the pigment and storage stability of the resulting ink.

When neutralizing the acid groups of the polymer a1, the neutralization is preferably conducted such that the pH value of the dispersion treatment product falls within the range of not less than 7 and not more than 11.

Examples of the neutralizing agent include bases such as lithium hydroxide, sodium hydroxide, potassium hydroxide, ammonia, various amines and the like. Among these neutralizing agents, preferred are sodium hydroxide and ammonia, and more preferred is sodium hydroxide.

The aforementioned neutralizing agents may be used alone or in the form of a mixture of any two or more thereof. In addition, the polymer a1 may be previously neutralized.

The equivalent of the neutralizing agent used is preferably not less than 10 mol%, more preferably not less than 20 mol% and even more preferably not less than 30 mol%, and is also preferably not more than 150 mol%, more preferably not more than 120 mol% and even more preferably not more than 100 mol%, from the viewpoint of improving storage stability of the resulting ink.

The equivalent of the neutralizing agent used herein may be calculated according to the following formula wherein the polymer a1' represents the polymer a1 before being neutralized.

Equivalent (mol%) of neutralizing agent used = [{mass (g) of neutralizing agent added/equivalent of neutralizing agent}/[{acid value (mgKOH/g) of polymer a1' x mass (g) of polymer (B)}/(56 x 1,000)]] x 100.

In the dispersion treatment of the step 1, the pigment particles may be atomized into fine particles having a desired particle size only by substantial dispersion treatment in which a shear stress is applied thereto. However, it is preferred that the pigment mixture is first subjected to preliminary dispersion treatment, and then further to the substantial dispersion treatment, from the viewpoint of obtaining a uniform pigment water dispersion.

Examples of a disperser used in the preliminary dispersion treatment include ordinary mixing and stirring devices such as an anchor blade, a disper blade, etc.

Examples of the means for applying a shear stress to the particles as used in the substantial dispersion treatment include kneading machines such as roll mills, kneaders, etc.; high-pressure homogenizers such as "Microfluidizer", eyc.; and media-type dispersers such as paint shakers, beads mills, etc. Among these devices, the high-pressure homogenizers and beads mills are preferably used from the viewpoint of reducing the particle size of the pigment.

In the case where the dispersion treatment is conducted using the high-pressure homogenizer, by controlling the number of passes through the device under a dispersing pressure of not less than 20 MPa, it is possible to control the particl size of the pigment to a desired value and also suitably adjust an average particle size of particles contained in the below-mentioned pigment water dispersion (I).

(Step 2)

The step 2 is the step of removing the organic solvent from the dispersion treatment product obtained in the step 1 to obtain a pigment water dispersion (i) of the pigment-containing polymer particles A1. The removal of the organic solvent from the dispersion treatment product may be conducted by conventionally known methods. The organic solvent is preferably substantially completely removed from the thus obtained pigment water dispersion (i). However, the residual organic solvent may be present in the pigment water dispersion (i) unless the objects and advantageous effects of the present invention are adversely affected by the residual organic solvent. The content of the residual organic solvent in the pigment water dispersion (i) is preferably not more than 0.1% by mass and more preferably not more than 0.01% by mass.

In addition, for the purpose of removing coarse particles, etc., it is preferred that the water dispersion obtained by removing the organic solvent from the dispersion treatment product is further subjected to centrifugal separation, and then a liquid layer portion separated therefrom was subjected to filtration treatment using a filter, etc., thereby obtaining the pigment water dispersion (i) as a filtrate formed by passing through the filter, etc.

Examples of commercially available products of the water dispersion of the pigment-containing polymer particles A1 include polyacrylic acids such as "ARON AC-10SL" available from Toagosei Co., Ltd., etc.; styrene-acrylic resins such as "JONCRYL 67", "JONCRYL 611", "JONCRYL 678", "JONCRYL 680", "JONCRYL 690" and "JONCRYL 819" all available from BASF Japan, Ltd., etc.; and the like.

(Step 3)

The step 3 is the step of adding a crosslinking agent to the pigment water dispersion (i) obtained in the step 2 to subject the pigment-containing polymer particles A1 to crosslinking reaction, thereby obtaining a pigment water dispersion (I) of the pigment-containing crosslinked polymer particles A.

In the step 3, the carbhoxy groups of the polymer a1 constituting the pigment-containing polymer particles A1 are partially crosslinked to form a crosslinked structure on the surface layer portion of the respective pigment-containing polymer particles A1. By forming such a crosslinked structure, it is considered that the polymr a2 obtained by crosslinking the polymer a1 is firmly adsorbed and fixed onto the surface of the pigment, and the pigment is inhibited from suffering from flocculation of the pigment, so that the resulting ink can be further improved in storage stability and substrate adhesion properties.

(Crosslinking Agent)

Examples of the suitable crosslinking agent include a compound containing two or more epoxy groups in a molecule thereof, a compound containing two or more oxazoline groups in a molecule thereof, and a compound containing two or more carbodiimide groups in a molecule thereof.

Specific examples of the compound containing two or more epoxy groups in a molecule thereof include polyglycidyl ethers such as polypropylene glycol diglycidyl ether, glycerol polyglycidyl ether, polyglycerol polyglycidyl ether, trimethylolpropane polyglycidyl ether, sorbitol polyglycidyl ether, pentaerythritol polyglycidyl ether, resorcinol diglycidyl ether, neopentyl glycol diglycidyl ether, 1,6-hexanediol diglycidyl ether, hydrogenated bisphenol A-type diglycidyl ethers, etc., and the like. Among these compounds, preferred is at least one compound selected from the group consisting of trimethylolpropane polyglycidyl ether, pentaerythritol polyglycidyl ether and 1,6-hexanediol diglycidyl ether, and more preferred is trimethylolpropane polyglycidyl ether or 1,6-hexanediol diglycidyl ether

Examples of commercially available products of the compound containing two or more oxazoline groups in a molecule thereof include "EPOCROS WS" series products and "EPOCROS K" series products all available from Nippon Shokubai Co., Ltd., and the like.

Specific examples of the compound containing two or more carbodiimide groups in a molecule thereof include high-molecular weight polycarbodiimides that may be produced by subjecting a diisocyanate compound to decarbonation condensation reaction in the presence of a carbodiimidation catalyst. Examples of commercially available products of the polycarbodiimides include "CARBODILITE" series products available from Nisshinbo Chemical Inc., and the like.

The crosslinking rate of the pigment-containing polymer particles A1 obtained in the step 1 or the step 3 as calculated in terms of a ratio of a mole equivalent number of crosslinkable functional groups of the crosslinking agent to a mole equivalent number of the carboxy groups of the polymer a1 is preferably not less than 10 mol%, more preferably not less than 20 mol% and even more preferably not less than 30 mol%, and is also preferably not more than 80 mol%, more preferably not more than 70 mol%, even more preferably not more than 60 mol% and further even more preferably not more than 50 mol%, from the viewpoint of improving storage srtability of the resulting ink.

From the same viewpoint as described above, the temperature used in the crosslinking treatment is preferably not lower than 40°C, more preferably not lower than 50°C and even more preferably not lower than 60°C, and is also preferably not higher than 95°C, more preferably not higher than 85°C and even more preferably not higher than 75°C.

From the viewpoint of completing the crosslinking reaction and attaining good cost efficiency, the time of the crosslinking treatment is preferably not less than 0.5 hour, more preferably not less than 1 hour and even more preferably not less than 1.5 hours, and is also preferably not more than 12 hours, more preferably not more than 10 hours, even more preferably not more than 8 hours and further even more preferably not more than 5 hours.

The concentration of non-volatile components in the resulting pigment water dispersion (I) (solid content of the pigment water dispersion (I)) is preferably not less than 10% by mass and more preferably not less than 15% by mass, and is also preferably not more than 55% by mass and more preferably not more than 50% by mass, from the viewpoint of improving dispersion stability of the pigment water dispersion as well as from the viewpoint of facilitating production of the ink.

The aforementioned solid content may be measured by the method described in Examples below.

The content of the pigment in the pigment water dispersion (I) is preferably not less than 5% by mass, more preferably not less than 10% by mass and even more preferably not less than 15% by mass, and is also preferably not more than 45% by mass, more preferably not more than 40% by mass and even more preferably not more than 35% by mass, from the viewpoint of improving dispersion stability of the pigment water dispersion.

The mass ratio of the crosslinked polymer a2 constituting the pigment-containing crosslinked polymer particles A to the pigment [crosslinked polymer a2/pigment] in the pigment water dispersion (I) is preferably not less than 8/92, more preferably not less than 10/90 and even more preferably not less than 12/88, and is also preferably not more than 45/55, more preferably not more than 40/60 and even more preferably not more than 35/65.

The average particle size of the pigment-containing crosslinked polymer particles A is preferably not less than 50 nm, more preferably not less than 80 nm and even more preferably not less than 100 nm, and is also preferably not more than 400 nm, more preferably not more than 350 nm and even more preferably not more than 300 nm, from the viewpoint of improving storage stability of the resulting ink.

The average particle size of the polymer particles may be measured by the method described in Examples below.

<Pigment-Free Water-Insoluble Polymer Particles B>

The ink of the present invention also contains pigment-free water-insoluble polymer particles B (polymer particles B) from the viewpoint of improving adhesion properties of the resulting ink onto a printing medium. The polymer particles B contain no pigment, and are in the form of water-insoluble polymer particles that are constituted of a water-insoluble polymer b (hereinafter also referred to merely as a "polymer b").

Meanwhile, the "water-insoluble" of the polymer b as used herein has the same definition as mentioned previously as to the polymer a1.

Examples of the polymer b include condensation-based polymers such as polyurethanes and polyesters, etc.; and vinyl-based polymers such as acrylic polymers, styrene-based polymers, styrene-acrylic polymers, butadiene-based polymers, styrene-butadiene-based polymers, vinyl chloride-based polymers, vinyl acetate-based polymers and acrylic-silicone-based polymers, etc. As the polymer particles B, from the viewpoint of promoting drying of the resulting ink on a printing medium to improve substrate adhesion properties of the resulting ink, preferred are water-insoluble acrylic polymer particles B1 and water-insoluble polyurethane resin particles B2.

[Water-Insoluble Acrylic Polymer Particles B1]

In the case where the polymer b is an acrylic polymer, the polymer b may be the same as or different from the aforementioned polymer a1, and preferably contains a constitutional unit derived from (meth)acrylic acid (b-1) and a constitutional unit derived from a (meth)acrylic acid ester (b-2).

The (meth)acrylic acid (b-1) is preferably at least one compound selected from the group consisting of acrylic acid and methacrylic acid, and more preferably methacrylic acid, from the viewpoint of improving substrate adhesion properties and storage stability of the resulting ink.

The (meth)acrylic acid ester (b-2) is preferably at least one compound selected from the group consisting of methyl (meth)acrylate, butyl (meth)acrylate, isobutyl (meth)acrylate, *tert*-butyl (meth)acrylate, 2-ethylhexyl (meth)acrylate and cyclohexyl (meth)acrylate, more preferably at least one compound selected from the group consisting of methyl (meth)acrylate, butyl (meth)acrylate, 2-ethylhexyl (meth)acrylate and cyclohexyl (meth)acrylate, and even more preferably 2-ethylhexyl (meth)acrylate, from the viewpoint of improving substrate adhesion properties and storage stability of the resulting ink.

The acrylic polymer b may also contain a constitutional unit derived from a monomer other than the aforementioned monomers (b-1) and (b-2). Examples of the other monomer include an ionic monomer other than (meth)acrylic acid, an aromatic group-containing hydrophobic monomer and a nonionic monomer. Among these other monomers, preferred is the aromatic group-containing hydrophobic monomer. Specific examples of the aromatic group-containing hydrophobic monomer include the aforementioned styrene-based monomer, an aromatic group-containing (meth)acrylate, an aromatic group-containing monomer-based macromonomer, and the like.

The content of the constitutional unit derived from the (meth)acrylic acid (b-1) in the acrylic polymer b is preferably not less than 1% by mass, more preferably not less than 1.5% by mass and even more preferably not less than 2% by mass, and is also preferably not more than 20% by mass, more preferably not more than 10% by mass and even more preferably not more than 5% by mass, from the viewpoint of improving substrate adhesion properties and storage stability of the resulting ink.

The content of the constitutional unit derived from the (meth)acrylic acid ester (b-2) in the acrylic polymer b is preferably not less than 80% by mass, more preferably not less than 90% by mass and even more preferably not less than 95% by mass, and is also preferably not more than 99% by mass, more preferably not more than 98.5% by mass and even more preferably not more than 98% by mass, from the viewpoint of improving substrate adhesion properties and storage stability of the resulting ink.

The weight-average molecular weight of the acrylic polymer b is preferably not less than 10,000, more preferably not less than 50,000 and even more preferably not less than 100,000, and is also preferably not more than 2,000,000, more preferably not more than 1,500,000 and even more preferably not more than 1,200,000, from the viewpoint of improving substrate adhesion properties and storage stability of the resulting ink.

The glass transition temperature (Tg) of the acrylic polymer b is preferably not lower than 0°C, more preferably not lower than 10°C, even more preferably not lower than 20°C and further even more preferably not lower than 30°C, and is also preferably not higher than 75°C, more preferably not higher than 70°C and even more preferably not higher than 60°C.

The average particle size of the water-insoluble polymer particles B1 is preferably not less than 30 nm, more preferably not less than 50 nm and even more preferably not less than 70 nm, and is also preferably not more than 180 nm, more preferably not more than 150 nm and even more preferably not more than 120 nm, from the viewpoint of improving substrate adhesion properties and storage stability of the resulting ink.

The weight-average molecular weight and the glass transition temperature (Tg) of the polymer as well as the average particle size of the polymer particles may be measured by the respective methods descried in Examples below.

(Synthesis of Water-Insoluble Acrylic Polymer Particles B1)

The water-insoluble acrylic polymer particles B1 may be produced by copolymerizing a mixture of the (meth)acrylic acid and the (meth)acrylic acid ester by conventionally known polymerization methods.

Upon the polymerization, as the polymerization initiator, there may be used persulfuric acid salts such as ammonium persulfate, potassium persulfate, etc., or water-soluble azo polymerization initiators, and the like. In addition, from the viewpoint of improving dispersion stability of the resin particles, as the surfactant, there may be used a nonionic surfactant such as polyoxyethylene alkyl ethers, polyoxyethylene alkyl aryl ethers, polyoxyethylene fatty acid ethers, oxyethylene/oxypropylene block copolymer, etc.

The preferred polymerization conditions may vary depending upon the kinds of polymerization initiators, etc., and are the same as described as to the polymerization conditions of the vinyl-based resins for the pigment-containing polymer particles A1.

The water-insoluble acrylic polymer particles B1 are preferably used in the form of a water dispersion (emulsion) of the polymer particles containing water as a main dispersing medium without removing the solvent used in the polymerization reaction therefrom, from the viewpoint of improving compounding properties of the polymer particles into the aqueous ink. The polymer particles are preferably neutralized with a neutralizing agent.

Examples of commercially available products of the dispersion of the water-insoluble acrylic polymer particles B1 include emulsions of acrylic resins such as "Neocryl A1127" (anionic self-crosslinkable water-based vinyl resin) available from DSM NeoResins Inc., "JONCRYL 390" available from BASF Japan, Ltd., etc.; styrene-acrylic resins such as "JONCRYL 7100", "JONCRYL 7600", "JONCRYL 734", "JONCRYL 780", "JONCRYL 537J" and "JONCRYL 538J" all available from BASF Japan, Ltd., etc.; vinyl chloride-acrylic resins such as "VINYBLAN 700" and "VINYBLAN 701" both available from Nissin Chemical Co., Ltd., etc.; and the like.

[Water-Insoluble Polyurethane Resin Particles B2]

The water-insoluble polyurethane resin particles B2 may be produced by subjecting a polyol, a diisocyanate and a dialkanol carboxylic acid to addition reaction to synthesize a polyurethane A, and then neutralizing carboxy groups contained in the thus obtained polyurethane A with a neutralizing agent to disperse the polyurethane A in water.

In the aforementioned addition reaction, a chain extender and a reaction terminator may also be used in combination with the aforementioned components, if required. In addition, the polyurethane A may be produced by conducting the reaction by a multiple-stage method to synthesize a urethane prepolymer, and then mixing the resulting urethane prepolymer with water while neutralizing the prepolymer with a neutralizing agent to thereby subject the prepolymer to water extension reaction and simultaneously disperse the resulting polymer in water. In this case, it is possible to facilitate control of a viscosity of the resulting dispersion and removal of the solvent therefrom, so that suitable production of the polyurethane can be achieved. Thus, it is possible to obtain an emulsion of the polyurethane in the form of fine particles having an average particle size of 0.01 to 1 $\mu$m.

The polyol used herein is not particularly limited as long as it is a compound containing two or more hydroxy groups in a molecule thereof. As the polyol, preferred are a polyether polyol, a polycarbonate polyol and a polyester polyol, more preferred are a polyether polyol and a polycarbonate polyol, and even more preferred is a polyether polyol.

More specifically, as the water-insoluble polyurethane resin particles B2, preferred are polyether-based polyurethane resin particles and polycarbonate-based polyurethane resin particles, and more preferred are polyether-based polyurethane resin particles.

Examples of the polyether polyol include polymers obtained by subjecting a cyclic ether compound such as ethyleneoxide, propyleneoxide, butyleneoxide, styreneoxide, tetrahydrofuran and the like alone or in the form of a mixture of any two or more thereof to ring opening polymerization reaction using an active hydrogen atom-containing compound, etc., as a catalyst. Specific examples of the polyether polyol include polyethylene glycol, polypropylene glycol, polytetramethylene glycol and the like.

As the reaction solvent used in the reaction between the polyol and the diisocyanate, from the viewpoint of emulsifying the reaction product, there are preferably used acetone, methyl ethyl ketone, ethyl acetate and the like.

The polycarbonate polyol may be produced by reacting a carbonate compound such as dimethyl carbonate, diethyl carbonate, diphenyl carbonate, ethylene carbonate, diethylene carbonate, etc., with an aliphatic diol having a carbon chain length of 4 to 9, etc.

Examples of the diisocyanate include chain-like aliphatic isocyanates such as tetramethylene diisocyanate, 1,6-hexamethylene diisocyanate, dodecamethylene diisocyanate, trimethylhexamethylene diisocyanate, etc.; cyclic aliphatic isocyanates; aromatic isocyanates; modified products of these diisocyanates; and the like. Among these diisocyanates, preferred are aliphatic diisocyanates.

The dialkanol carboxylic acid is a component for introducing an anionic hydrophilic group into the aforementioned polyurethane in order to stably disperse the polyurethane in water. Examples of the dialkanol carboxylic acid include dimethylol acetic acid, dimethylol propionic acid and the like. These carboxylic acids may be neutralized with a neutralizing agent to prepare a water dispersion thereof.

The molecular weight of the reaction product of the polyol and the diisocyanate may be further increased using a conventionally known chain extender such as a polyol or a polyamine, etc., if required. Also, as the reaction terminator, there may be used a monoalcohol or a monoamine, etc.

The water-insoluble polyurethane resin particles B2 are preferably used in the form of a water dispersion thereof which is prepared by dispersing the water-insoluble polyurethane resin particles B2 in water. Examples of the commercially available products of such a water dispersion include "NeoRez R-650" (containing polyether-based polyurethane resin particles) available from DSM NeoResins Inc., "NeoRez R-9603" (containing polycarbonate-based polyurethane resin particles) available from DSM NeoResins Inc., "WBR" series products available from Taisei Fine Chemical Co., Ltd., and the like.

[Neutralization of Pigment-Free Water-Insoluble Polymer Particles B]

The pigment-free water-insoluble polymer particles B (polymer particles B) are preferably used in the form of a water dispersion thereof as described previously. Upon preparing the water dispersion, it is preferred that the polymer b constituting the polymer particles B is neutralized with a neutralizing agent.

Examples of the neutralizing agent include alkali metal hydroxides such as lithium hydroxide, sodium hydroxide, potassium hydroxide, etc.; ammonia; the below-mentioned organic amine compound; and the like. Among these neutralizing agents, preferred are sodium hydroxide and the below-mentioned organic amine compound, and more preferred is the below-mentioned organic amine compound. These neutralizing agents may be used alone or in the form of a mixture of any two or more thereof.

The aqueous ink for plate-based printing according to the present invention contains the below-mentioned organic amine compound as the neutralizing agent from the viewpoint of improving transfer properties and substrate adhesion properties of the resulting ink. It is preferred that the polymer particles B are prepared in the presence of the organic amine compound as the neutralizing agent to incorporate the organic amine compound into the water dispersion liquid of the polymer particles B.

The equivalent (mol%) of the neutralizing agent used is preferably not less than 10 mol% and more preferably not less than 30 mol%, and is also preferably not more than 150 mol% and more preferably not more than 120 mol%, from the viewpoint of improving dispersion stability of the polymer particles B. The equivalent of the neutralizing agent used may be determined by the same method as described above.

The acid value of each of the water-insoluble acrylic polymer and the water-insoluble polyurethane is preferably not less than 5 mgKOH/g and more preferably not less than 10 mgKOH/g, and is also preferably not more than 50 mgKOH/g, from the viewpoint of improving dispersion stability of these polymers.

<Organic Amine Compound>

The aqueous ink for plate-based printing according to the present invention contains an organic amine compound as a neutralizing agent from the viewpoint of improving transfer properties and substrate adhesion properties of the resulting ink.

Subject to the appended claims, the organic amine compound is preferably a water-soluble organic amine compound.

The "water-soluble" of the organic amine compound as used herein means that the solubility in water of the organic amine compound as measured by dissolving the compound in 100 g of water at 25°C (hereinafter also referred to merely as "water solubility") is not less than 5 g/100gH$_2$O. For example, the water solubility of triethylamine as measured at 25°C is 9 g/100gH$_2$O, and the water solubility of N,N-dimethyl ethanolamine (dimethylaminoethanol) as measured at 25°C is 95.4 g/100gH$_2$O.

The organic amine compound is preferably such a water-soluble organic amine compound that the number of carbon atoms contained in the compound is not less than 3, and is also not more than 8 and more preferably not more than 6, from the viewpoint of improving transfer properties and substrate adhesion properties of the resulting ink when used in plate-based printing.

The boiling point of the organic amine compound is preferably not lower than 85°C, more preferably not lower than 100°C and even more preferably not lower than 120°C from the viewpoint of improving transfer properties and substrate adhesion properties of the resulting ink when used in plate-based printing, and is also preferably not higher than 250°C, more preferably not higher than 200°C and even more preferably not higher than 180°C from the viewpoint of improving water resistance of the resulting ink.

The organic amine compound is at least a trialkyl amine having not less than 3 and not more than 8 carbon atoms, such as triethylamine, etc.; described herein are also water-soluble alkanolamines having not less than 2 and not more than 8 carbon atoms, e.g., primary alkanolamines such as monoethanolamine, monopropanolamine, monobutanolamine, etc.; secondary alkanolamines such as N-methyl ethanolamine, N-ethyl ethanolamine, N-methyl propanolamine, diethanolamine, diisopropanolamine, etc.; tertiary alkanolamines such as N,N-dimethyl ethanolamine, N,N-dimethyl propanolamine, N,N-diethyl ethanolamine, N-ethyl diethanolamine, N-methyl diethanolamine, triethanolamine, triisopropanolamine, etc.; and the like.

Among these organic amine compounds, from the viewpoint of improving transfer properties and substrate adhesion properties of the resulting ink when used in plate-based printing, the organic amine compound is at least a trialkyl amine having not less than 3 and not more than 8 carbon atoms and more preferred is at least triethylamine (boiling point: 89°C).

These organic amine compounds may be used alone or in the form of a mixture of any two or more thereof.

The aqueous ink of the present invention may also contain a water-soluble basic compound other than the organic amine compound unless the advantageous effects of the present invention are adversely affected by inclusion thereof. As the other water-soluble base compound, there may be used alkali metal hydroxides such as sodium hydroxide, etc.

<Water-Soluble Organic Solvent>

The aqueous ink for plate-based printing according to the present invention contains a water-soluble organic solvent having a boiling point of not lower than 100°C and not higher than 260°C from the viewpoint of improving transfer properties and substrate adhesion properties of the resulting ink.

The water-soluble organic solvent may be present either in a liquid state or in a solid state at an ordinary temperature (25°C). The water-soluble organic solvent as used herein means an organic solvent having a solubility in water of not less than 10 mL as measured by dissolving the organic solvent in 100 mL of water at 25°C.

The boiling point of the water-soluble organic solvent is preferably not lower than 110°C, more preferably not lower than 115°C and even more preferably not lower than 118°C, and is also preferably not higher than 250°C, more preferably not higher than 240°C and even more preferably not higher than 235°C, from the same viewpoint as described above.

The boiling point as used herein means a normal boiling point (boiling point as measured at 1 atm), and in the case where two or more water-soluble organic solvents are used as the aforementioned water-soluble organic solvent, the boiling point of the water-soluble organic solvent is a weighted mean value of boiling points of the two or more water-soluble organic solvents which are weighted by contents (% by mass) of the respective water-soluble organic solvents.

Examples of the water-soluble organic solvent include (i) a glycol ether, (ii) a polyhydric alcohol such as propylene glycol, etc., (iii) a nitrogen-containing heterocyclic compound such as *N*-methyl-2-pyrrolidone, 2-pyrrolidone, etc., (iv) an alkanol amine, and the like. Among these water-soluble organic solvents, preferred is the glycol ether (i).

As the glycol ether (i), preferred is at least one compound selected from the group consisting of an alkylene glycol monoalkyl ether and an alkylene glycol dialkyl ether, and more preferred is an alkylene glycol monoalkyl ether. The number of carbon atoms of an alkyl group contained in the aforementioned glycol ether is not less than 1, preferably not less than 2 and more preferably not less than 3, and is also preferably not more than 6, more preferably not more than 5 and even more preferably not more than 4. The alkyl group contained in the glycol ether may be either linear or branched.

Examples of the alkylene glycol monoalkyl ether include ethylene glycol monoethyl ether (boiling point: 136°C), ethylene glycol monoisopropyl ether (boiling point: 142°C), ethylene glycol monopropyl ether (boiling point: 151°C), ethylene glycol monobutyl ether (boiling point: 171°C), diethylene glycol monomethyl ether (boiling point: 194°C), diethylene glycol monoethyl ether (boiling point: 202°C), diethylene glycol monoisopropyl ether (boiling point: 207°C), diethylene glycol monoisobutyl ether (boiling point: 220°C), diethylene glycol monobutyl ether (boiling point: 230°C), triethylene glycol monomethyl ether (boiling point: 248°C), dipropylene glycol monobutyl ether (boiling point: 231°C), dipropylene glycol monomethyl ether (boiling point: 189°C), tripropylene glycol monomethyl ether (boiling point: 243°C), and the like.

Of these alkylene glycol monoalkyl ethers, preferred is at least one compound selected from the group consisting of ethylene glycol monoisopropyl ether, ethylene glycol monopropyl ether, diethylene glycol monomethyl ether, diethylene glycol monoisopropyl ether, diethylene glycol monoisobutyl ether and diethylene glycol monobutyl ether, and more preferred is at least one compound selected from the group consisting of ethylene glycol monoisopropyl ether (boiling point: 142°C), diethylene glycol monoisopropyl ether (boiling point: 207°C) and diethylene glycol monoisobutyl ether (boiling point: 220°C).

As the polyhydric alcohol (ii), preferred is at least one compound selected from the group consisting of alkanediols having not less than 2 and not more than 6 carbon atoms, such as propylene glycol (boiling point: 188°C), diethylene glycol (boiling point: 245°C), 1,2-hexanediol (boiling point: 223°C), etc., and polypropylene glycols having a molecular weight of 500 to 1000.

The aqueous ink of the present invention may also contain an organic solvent other than the water-soluble organic solvent having a boiling point of not lower than 100°C and not higher than 260°C unless the advantageous effects of the present invention are adversely affected by inclusion thereof. As the other organic solvent, there may be mentioned a monohydric alcohol such as ethanol, isopropyl alcohol, *n*-propyl alcohol, etc. Examples of the water-soluble organic solvent having a boiling point higher than 260°C include triethylene glycol (boiling point: 285°C), tripropylene glycol (boiling point: 273°C), glycerin (boiling point: 290°C) and the like.

<Surfactant>

The aqueous ink for plate-based printing according to the present invention preferably contains a surfactant from the viewpoint of improving transfer properties and substrate adhesion properties of the resulting ink.

The surfactant is preferably a nonionic surfactant. From the viewpoint of improving transfer properties and substrate adhesion properties of the resulting ink, the surfactant is more preferably at least one surfactant selected from the group consisting of an acetylene glycol-based surfactant and a silicone-based surfactant, and it is even more preferred that the acetylene glycol-based surfactant and the silicone-based surfactant are used in combination with each other.

(Acetylene Glycol-Based Surfactant)

Examples of the acetylene glycol-based surfactant include acetylene-based diols such as 2,4,7,9-tetramethyl-5-decyne-4,7-diol, 3,6-dimethyl-4-octyne-3,6-diol, 3,5-dimethyl-1-hexyne-3-ol, 2,4-dimethyl-5-hexyne-3-ol, 2,5-dimethyl-3-hexyne-2,5-diol, 2,5,8,11-tetramethyl-6-dodecyne-5,8-diol, etc., and ethyleneoxide adducts of these compounds.

The sum (n) of average molar numbers of addition of ethyleneoxide groups (EO) in the aforementioned ethyleneoxide adducts is preferably not less than 1 and more preferably not less than 1.5, and is also preferably not more than 20 and more preferably not more than 10.

Examples of commercially available products of the acetylene glycol-based surfactant include "SURFYNOL" series products and "OLFINE" series products both available from Nissin Chemical Co., Ltd., and "ACETYLENOL" series products available from Kawaken Fine Chemicals Co., Ltd., and the like. Of these commercially available products of the acetylene glycol-based surfactant, preferred are "SURFYNOL 104PG50" (a propylene glycol solution of 2,4,7,9-tetramethyl-5-decyne-4,7-diol; active ingredient content: 50%), "SURFYNOL 420" (EO adduct of 2,4,7,9-tetramethyl-5-decyne-4,7-diol; n: 1.3), "SURFYNOL 440" (average molar number of addition of EO: 3.5), "SURFYNOL 465" (average molar number of addition of EO: 10), "OLFINE E1010", "ACETYLENOL E100", "ACETYLENOL E200", "ACETYLENOL E40", "ACETYLENOL E60", "ACETYLENOL E81", "ACETYLENOL E100", and the like.

(Silicone-Based Surfactant)

Examples of the silicone-based surfactant include surfactants such as dimethyl polysiloxane, a polyether-modified silicone, an amino-modified silicone, a carboxy-modified silicone, etc. Of these surfactants, from the same viewpoint as described above, preferred is the polyether-modified silicone-based surfactant.

The polyether-modified silicone-based surfactant has such a structure that a hydrocarbon group bonded to a side chain and/or a terminal end of a silicone oil is substituted with a polyether group. Examples of the suitable polyether group of the polyether-modified silicone-based surfactant include a polyethyleneoxy group, a polypropyleneoxy group and a polyalkyleneoxy group formed by addition-bonding an ethyleneoxy group (EO) and a propyleneoxy group (PO) to each other in a block form or a random form. More specifically, as the polyether-modified silicone-based surfactant, there may be used a compound formed by grafting a polyether group to a main chain of a silicone, a compound formed by bonding a silicone and a polyether group to each other in a block form, and the like.

The HLB (hydrophile lipophile balance) value of the polyether-modified silicone-based surfactant is preferably not less than 2, more preferably not less than 3 and even more preferably not less than 4 from the viewpoint of improving solubility of the polyether-modified silicone-based surfactant in the ink. The term "HLB value" as used herein may be measured by a Griffin method.

In addition, the kinematic viscosity of the polyether-modified silicone-based surfactant as measured at 25°C is preferably not less than 50 $mm^2/s$ and more preferably not less than 80 $mm^2/s$, and is also preferably not more than 500 $mm^2/s$ and more preferably not more than 300 $mm^2/s$. Meanwhile, the kinematic viscosity may be measured using a Ubbelohde viscometer.

Examples of commerxially avaulable products of the polyether-modified silicone-based surfactant include "KF" series products available from Shin-Etsu Chemical Co., Ltd., such as "KF-353", "KF-355A", "KF-642", "KF-6011", etc.; "SILFACE SAG" series products available from Nissin Chemical Co., Ltd.,; "BYK" series products available from BYK Chemie Japan K.K.; and the like.

Of these polyether-modified silicone-based surfactants, preferred are "KF" series products available from Shin-Etsu Chemical Co., Ltd.

[Production of Aqueous Ink for Plate-Based Printing]

The aqueous ink for plate-based printing according to the present invention may be efficiently produced by mixing the pigment water dispersion (I), the water dispersion liquid of the polymer particles B, the organic amine compound and the water-soluble organic solvent having a boiling point of not lower than 100°C and not higher than 260°C, if required together with the surfactant and the other organic solvent, etc. The method of mixing these components is not particularly limited. In addition, the contents or concentrations of the respective components in the ink of the present invention may be controlled to those used upon the printing, and the thus prepared ink may be directly used for the printing. Alternatively, a base ink prepared previously may be diluted with water, etc., to prepare the ink containing the respective components whose contents or concentrations are controlled to those used upon the printing, and the thus prepared ink may be used for the printing.

The contents of the respective components in the aqueous ink for plate-based printing according to the present invention as well as properties of the ink are as follows. Meanwhile, the contents of the respective components in the ink indicate contents thereof used upon printing.

(Content of Pigment)

The content of the pigment in the ink is preferably not less than 1% by mass, more preferably not less than 3% by mass and even more preferably not less than 5% by mass from the viewpoint of enhancing optical density of the ink, and is also preferably not more than 15% by mass, more preferably not more than 10% by mass and even more preferably not more than 7% by mass from the viewpoint of reducing viscosity of the ink upon volatilizing the solvent therefrom and improving storage stability of the ink.

The mass ratio of the pigment to whole solid components of the ink [pigment/(whole solid components of ink)] is preferably not less than 0.1, more preferably not less than 0.2 and even more preferably not less than 0.3, and is also preferably not more than 0.8, more preferably not more than 0.7 and even more preferably not more than 0.6, from the viewpoint of improving transfer properties and substrate adhesion properties of the resulting ink upon plate-based printing.

(Content of Pigment-Containing Crosslinked Polymer Particles A)

The content of the pigment-containing crosslinked polymer particles A in the ink is preferably not less than 3% by mass, more preferably not less than 5% by mass and even more preferably not less than 7% by mass from the viewpoint of enhancing optical density of the ink, and is also preferably not more than 15% by mass, more preferably not more than 13% by mass and even more preferably not more than 10% by mass from the viewpoint of improving storage stability of the ink.

(Content of Polymer Particles B)

The content of the polymer particles B in the ink is preferably not less than 0.3% by mass, more preferably not less than 1% by mass and even more preferably not less than 2% by mass, and is also preferably not more than 7% by mass, more preferably not more than 5% by mass and even more preferably not more than 3% by mass, from the viewpoint of improving transfer properties and substrate adhesion properties of the resulting ink upon plate-based printing.

The mass ratio of the polymer particles B to the pigment-containing crosslinked polymer particles A [polymer particles B/pigment-containing crosslinked polymer particles A] is preferably not less than 0.2, more preferably not less than 0.4 and even more preferably not less than 0.6, and is also preferably not more than 2, more preferably not more than 1.8 and even more preferably not more than 1.5, from the viewpoint of improving transfer properties and substrate adhesion properties of the resulting ink upon plate-based printing.

The mass ratio of the polymer to the pigment [polymer/pigment] in the ink is preferably not less than 0.2, more preferably not less than 0.3 and even more preferably not less than 0.4, and is also preferably not more than 3, more preferably not more than 2.5 and even more preferably not more than 2, from the viewpoint of improving transfer properties and substrate adhesion properties of the resulting ink upon plate-based printing.

Meanwhile, since the ink of the present invention contains the pigment-containing crosslinked polymer particles A and the polymer particles B, the amount of the polymer in the aforementioned mass ratio [polymer/pigment] means a total amount of the crosslinked polymer a2 and the polymer b.

The mass ratio of the crosslinked polymer a2 to the polymer b constituting the polymer particles B [crosslinked polymer a2/polymer b] is preferably not less than 0.1, more preferably not less than 0.12 and even more preferably not less than 0.14, and is also preferably not more than 1, more preferably not more than 0.8 and even more preferably not more than 0.5, from the viewpoint of improving transfer properties and substrate adhesion properties of the resulting ink upon plate-based printing.

(Content of Organic Amine Compound)

The content of the organic amine compound in the ink is preferably not less than 0.005% by mass, more preferably not less than 0.01% by mass and even more preferably not less than 0.03% by mass, and is also preferably not more than 1.5% by mass, more preferably not more than 0.8% by mass and even more preferably not more than 0.5% by mass, from the viewpoint of improving substrate adhesion properties of the resulting ink.

(Content of Water-Soluble Organic Solvent)

The content of the water-soluble organic solvent having a boiling point of not lower than 100°C and not higher than 260°C in the ink is not less than 1% by mass and not more than 30% by mass. From the viewpoint of improving transfer properties and substrate adhesion properties of the resulting ink upon plate-based printing, the content of the water-soluble organic solvent in the ink is preferably not less than 1.5% by mass, more preferably not less than 2% by mass and even more preferably not less than 4% by mass, and is also preferably not more than 15% by mass, more preferably not more than 10% by mass and even more preferably not more than 8% by mass.

The ink may also contain an organic solvent having a boiling point of lower than 100°C or higher than 260°C. However, from the viewpoint of improving transfer properties and substrate adhesion properties of the resulting ink upon plate-based printing, the content of the organic solvent having a boiling point of lower than 100°C or higher than 260°C in the ink is preferably not more than 5% by mass, more preferably not more than 3% by mass and even more preferably not more than 1% by mass.

(Content of Surfactant)

The content of the surfactant in the ink is preferably not less than 0.1% by mass, more preferably not less than 0.2% by mass and even more preferably not less than 0.5% by mass, and is also preferably not more than 5% by mass, more preferably not more than 4% by mass and even more preferably not more than 3% by mass, from the viewpoint of improving wettability of the resulting ink to a printing medium.

The content of the acetylene glycol-based surfactant in the ink is preferably not less than 0.2% by mass, more preferably not less than 0.4% by mass and even more preferably not less than 0.6% by mass, and is also preferably not more than 4% by mass, more preferably not more than 3% by mass and even more preferably not more than 2% by mass, from the same viewpoint as described above.

The content of the silicone-based surfactant in the ink is preferably not less than 0.01% by mass, more preferably not less than 0.03% by mass and even more preferably not less than 0.05% by mass, and is also preferably not more than 3% by mass, more preferably not more than 2% by mass and even more preferably not more than 1% by mass, from the same viewpoint as described above.

The content of water in the ink is preferably not less than 50% by mass, more preferably not less than 55% by mass, even more preferably not less than 60% by mass and further even more preferably not less than 66% by mass, and is also preferably not more than 80% by mass, more preferably not more than 78% by mass, even more preferably not more than 76% by mass and further even more preferably not more than 74% by mass, from the viewpoint of improving transfer properties and substrate adhesion properties of the resulting ink upon plate-based printing.

In the case where the ink contains an optional component(s) other than the pigment-containing crosslinked polymer particles A, the polymer particles B, the organic amine compound, the water-soluble organic solvent having a boiling point of not lower than 100°C and not higher than 260°C, the surfactant and water, the other optional component(s) may be incorporated into the ink by replacing a part of the content of water therewith.

The ink of the present invention may also contain various additives as optional components, such as a pH modifier, a viscosity controller, a defoaming agent, an antiseptic agent, a rust preventive, etc., according to use or applications of the ink.

(Properties of Ink)

The Zahn cup No. 3 viscosity (Zahn seconds) of the ink as measured at 20°C is preferably not less than 10 seconds, more preferably not less than 12 seconds and even more preferably not less than 13 seconds, and is also preferably not more than 25 seconds, more preferably not more than 20 seconds and even more preferably not more than 18 seconds, from the viewpoint of improving transfer properties and substrate adhesion properties of the resulting ink upon plate-based printing.

The pH value of the ink as measured at 20°C is preferably not less than 5.5, more preferably not less than 6.0 and even more preferably not less than 6.5 from the viewpoint of improving dispersion stability of the resulting ink, and is also preferably not more than 11.0, more preferably not more than 10.5 and even more preferably not more than 10.0 from the viewpoint of improving the resistance of members to the ink and suppressing skin irritation.

[Plate-Based Printing Method]

The plate-based printing method of the present invention is a method of printing characters or images on a low-liquid absorbing printing medium using the aqueous ink of the present invention.

Examples of the plate-based printing method include a gravure printing method, a flexographic printing method, a typographic printing method, etc., using a printing plate such as an intaglio printing plate, a lithographic printing plate, a letterpress printing plate, etc. The aqueous ink for plate-based printing according to the present invention is excellent in transfer properties to a substrate and also excellent in substrate adhesion properties after being transferred thereto, and is therefore preferably used in gravure printing in order to make use of the advantageous features thereof.

By printing characters or images on a printing medium by a gravure printing method using the ink of the present invention, it is possible to obtain a high-definition gravure printed material that is excellent in transfer properties and substrate adhesion properties.

The gravure printing is such a printing method as explained in detail hereinunder. That is, while rotating a gravure cylinder (a gravure printing plate) on a surface of which recessed cells are formed, the aforementioned ink is fed over the surface of the gravure cylinder, and scraped off therefrom by a doctor blade fixedly mounted at a predetermined position to allow the ink to remain only within the cells. Then, a printing medium continuously fed towards the gravure cylinder is pressure-contacted to the surface of the gravure cylinder by means of an impression cylinder whose surface is formed of a rubber to thereby transfer only the ink in the cells of the gravure cylinder to the printing medium and thereby print characters or images on the printing medium.

(Printing Medium)

As the printing medium, preferred is a low-liquid absorbing printing medium such as a low-liquid absorbing coated paper, a resin film and the like.

Examples of the coated paper include a versatile glossy coated paper, a multi-color foam glossy coated paper, and the like.

As the resin film, there may be used a transparent synthetic resin film. Examples of the transparent synthetic resin film include a polyester film, a polyvinyl chloride film, a polypropylene film, a polyethylene film, a nylon film and the like. Among these resin films, from the viewpoint of improving suitability to after-processing treatments such as punching treatment of a printed material obtained after the printing, etc., preferred are a polyester film and a polypropylene film.

These resin films may be in the form of either a biaxially oriented film, a monoaxially oriented film or a non-oriented film. Among these films, preferred are a polyester film and an oriented polypropylene film. In addition, from the viewpoint of improving gravure printability, there are more preferably used a polyester film such as a polyethylene terephthalate (PET) film subjected to corona discharge treatment, etc., and an oriented polypropylene film such as a biaxially oriented polypropylene (OPP) film subjected to corona discharge treatment, etc.

EXAMPLES

In the following Production Examples, Examples and Comparative Examples, the "part(s)" and "%" indicate "part(s) by mass" and "% by mass", respectively, unless otherwise specified. Meanwhile, the respective properties, etc., were measured by the following methods.

(1) Measurement of Weight-Average Molecular Weight of Polymer

The weight-average molecular weight of the polymer was measured by gel permeation chromatography [GPC apparatus: "HLC-8320GPC" available from Tosoh Corporation; columns: "TSKgel Super AWM-H", "TSKgel Super AW3000" and "TSKgel guardcolumn Super AW-H" all available from Tosoh Corporation; flow rate: 0.5 mL/min] using a solution prepared by dissolving phosphoric acid and lithium bromide in $N,N$-dimethylformamide such that concentrations of phosphoric acid and lithium bromide in the resulting solution were 60 mmol/L and 50 mmol/L, respectively, as an eluent, and using kits of monodisperse polystyrenes having previously known molecular weights [PStQuick B(F-550, F-80, F-10, F-1, A-1000), PStQuick C(F-288, F-40, F-4, A-5000, A-500] all available from Tosoh Corporation as a reference standard substance.

As a sample to be measured, there was used a dispersion prepared by mixing 0.1 g of the polymer with 10 mL of the aforementioned eluent in a glass vial, stirring the resulting mixture with a magnetic stirrer at 25°C for 10 hours, and then subjecting the mixture to filtration treatment through a syringe filter "DISMIC-13HP" (formed of PTFE; 0.2 $\mu$m) available from Advantec Co., Ltd.

(2) Measurement of Average Particle Sizes of Pigment-Containing Polymer Particles A and Polymer Particles B

The cumulant analysis of the particles was conducted using a laser particle analyzing system "ELS-8000" available from Otsuka Electrics Co., Ltd., to measure an average particle size thereof. In the measurement, there was used a dispersion liquid diluted with water such that a concentration of the particles in the dispersion was adjusted to 5 $\times$ 10$^{-3}$% by weight (in terms of a solid content thereof. The measurement was conducted under the conditions including a temperature of 25°C, an angle between incident light and detector of 90° and a cumulative number of 100 times, and a refractive index of water (1.333) was input to the analyzing system as a refractive index of the dispersing medium. The thus measured cumulant average particle size was defined as respective average particle sizes of the pigment-containing polymer particles A and the polymer particles B.

(3) Measurement of Solid Content

Using an infrared moisture meter "FD-230" available from Kett Electric Laboratory, 5 g of a sample to be measured was dried at a drying temperature of 150°C under a measuring mode 96 (monitoring time: 2.5 minutes/variation range: 0.05%), and then a water content (%) of the sample to be measured was measured to calculate a solid content thereof according to the following formula.

$$\text{Solid Content (\%) = 100 - Water Content (\%) of Sample to be Measured}$$

(4) Measurement of Acid Value of Polymer

In an automatic potentiometric titrator (power burette; "Model No.: APB-610") available from Kyoto Electronics Manufacturing Co., Ltd., the resin was dissolved in a titrant solvent prepared by mixing toluene and acetone (2:1), and the resulting solution was subjected to titration with a 0.1N potassium hydroxide/ethanol solution by a potentiometric titration method until reaching an end point of the titration observed as an inflection point of the titration curve. The acid value of the resin was calculated from an amount (titer) of the potassium hydroxide solution used in the titration until reaching the end point.

(5) Measurement of Glass Transition Temperature (Tg) of Water-Insoluble Polymer

Using a differential scanning calorimeter "Q100" available from TA Instruments Japan Inc., a sample to be measured was heated to 200°C and then cooled from 200°C to 0°C at a temperature drop rate of 10°C/minute. Then, the sample was further heated at a temperature rise rate of 10°C/minute until reaching 200°C to measure an endothermic curve thereof.
Among the endothermic peaks observed in the thus measured characteristic curve, the temperature of the peak having a largest peak area was defined as an endothermic maximum peak temperature which was regarded as a glass transition temperature (Tg) of the sample.

(6) Measurement of Boiling Point of Organic Solvent

The boiling point of the organic solvent was measured according to JIS K2254, and an initial boiling point of the organic solvent thus meaured was defiend as the boiling point of the organic solvent.

Production Example 1 (Production of Pigment Water Dispersion A-1)

(1) Two hundred thirty six parts of ion-exchanged water were weighed and placed in a 2 L-capacity flask, and then 60 parts of a styrene-acrylic polymer "JONCRYL 690" (tradename; solid content: 20%; weight-average molecular weight: 16500; acid value: 240 mgKOH/g; Tg: 105°C) available from BASF AG and 36.5 parts of a 5N sodium hydroxide solution (sodium neutralization degree: 60 mol%) were charged into the flask. The contents of the flask were stirred for 2 hours using an anchor blade at 200 rpm, thereby obtaining 332.5 parts of a polymer aqueous solution (solid content: 19.9%).
A 2 L-capacity container equipped with a disper blade was charged with 331.7 parts of the aforementioned polymer aqueous solution and 150.35 parts of ion-exchanged water, and the contents of the container were stirred using a disper "ULTRA DISPER" (tradename) available from Asada Iron Works Co., Ltd., at 1400 rpm for 15 minutes while cooling in a water bath at 0°C.

(2) Next, 200 parts of a magenta pigment (C.I. Pigment Red 146) were added to the container, and the contents of the container were stirred at 6400 rpm for 1 hour. The resulting dispersion liquid was charged into a wet disperser "Ultra Apex Mill UAM05" (tradename) available from HIROSHIMA METAL & MACHINERY Co., Ltd., packed with 0.3 mmϕ zirconia beads "XTZ Ball" (tradename) available from Nikkato Corporation at a packing rate of 80% by volume, and subjected to dispersion treatment by passing the dispersion liquid through the disperser 5 times at a peripheral speed of 8 m/s and a flow rate of 200 g/min while cooling the dispersion liquid with chilled water at 5°C, followed by subjecting the resulting dispersion to filtration treatment through a 200-mesh wire screen.

(3) Five hundred parts of the filtrate obtained in the above (2) (pigment: 150.0 parts; polymer: 45.0 parts) were mixed with 9.93 parts of a crosslinking agent "DENACOL EX-321L" (trimethylolpropane polyglycidyl ether; epoxy equivalent: 129; corresponding to 40 mol% on the basis of a carboxylic acid acting as a crosslinking reaction site contained in an acrylic acid moiety in the polymer) available from Nagase ChemteX Corporation and 1.2 parts of "Ploxel LV(S)" (mildew-proof agent; active ingredient content: 20%) available from LONZA Japan K.K., followed by further adding 91.6 parts of ion-exchanged water to the resulting mixture. The obtained dispersion was stirred at 70°C for 3 hours, and then subjected to filtration treatment through a 200-mesh wire screen, thereby obtaining 602.7 parts of a water dispersion A-1 of pigment-containing crosslinked polymer particles (solid content: 34.0%; pigment: 24.9%; polymer: 9.1%; average particle size: 280 nm).

Production Example 2 (Production of Pigment Water Dispersion A-2)

(1) A 2 L-capacity container equipped with a disper blade was charged with 187.7 parts of the polymer aqueous solution obtained in Production Example 1(1) and 220.9 parts of ion-exchanged water, and the contents of the container were stirred using a disper "ULTRA DISPER" (tradename) available from Asada Iron Works Co., Ltd., at 1400 rpm for 15 minutes while cooling in a water bath at 0°C.

(2) Next, 200 parts of a magenta pigment (C.I. Pigment Red 146) were added to the container, and the subsequent procedure was conducted in the same manner as in Production Example 1(2), thereby obtaining a filtrate.

(3) Five hundred parts of the filtrate obtained in the above (2) (pigment: 163.8 parts; polymer: 31.2 parts) were mixed with 6.88 parts of a crosslinking agent "DENACOL EX-321L" (trimethylolpropane polyglycidyl ether; epoxy equivalent: 129; corresponding to 40 mol% on the basis of a carboxylic acid acting as a crosslinking reaction site contained in an acrylic acid moiety in the polymer) available from Nagase ChemteX Corporation and 1.2 parts of "Ploxel LV(S)" (mildew-proof agent; active ingredient content: 20%) available from LONZA Japan K.K., followed by further adding 85.7 parts of ion-exchanged water to the resulting mixture. The obtained dispersion was stirred at 70°C for 3 hours, and then subjected to filtration treatment through a 200-mesh wire screen, thereby obtaining 593.8 parts of a water dispersion A-2 of pigment-containing crosslinked polymer particles (solid content: 34.0%; pigment: 27.6%; polymer: 6.4%; average particle size: 280 nm).

Production Example 3 (Production of Pigment Dispersion A-3)

(1) A 2 L-capacity container equipped with a disper blade was charged with 331.3 parts of the polymer aqueous solution obtained in Production Example 1(1) and 238.7 parts of ion-exchanged water, and the contents of the container were stirred using a disper "ULTRA DISPER" (tradename) available from Asada Iron Works Co., Ltd., at 1400 rpm for 15 minutes while cooling in a water bath at 0°C.

(2) Next, 180 parts of a black pigment (C.I. Pigment Black 7), 14.54 parts of a crosslinking agent "DENACOL EX-321L" (trimethylolpropane polyglycidyl ether; epoxy equivalent: 129; corresponding to 40 mol% on the basis of a carboxylic acid acting as a crosslinking reaction site contained in an acrylic acid moiety in the polymer) available from Nagase ChemteX Corporation and 1.53 parts of "Ploxel LV(S)" (mildew-proof agent; active ingredient content: 20%) available from LONZA Japan K.K., were added to the container, and the contents of the container were stirred at 6400 rpm for 1 hour.

(3) The resulting dispersion liquid was charged into a wet disperser "Ultra Apex Mill UAM05" (tradename) available from HIROSHIMA METAL & MACHINERY Co., Ltd., packed with 0.3 mmϕ zirconia beads "XTZ Ball" (tradename) available from Nikkato Corporation at a packing rate of 80% by volume, and subjected to dispersion treatment by passing the dispersion liquid through the disperser 5 times at a peripheral speed of 8 m/s and a flow rate of 200 g/min while cooling the dispersion liquid with chilled water at 15°C, followed by subjecting the resulting dispersion to filtration treatment through a 200-mesh wire screen, thereby obtaining 766.1 parts of a water dispersion A-3 of pigment-containing crosslinked polymer particles (solid content: 34.0%; pigment: 23.5%; polymer: 10.5%; average particle size: 220 nm).

Production Example 4 (Production of Pigment Dispersion A-4)

(1) A 2 L-capacity container equipped with a disper blade was charged with 331.3 parts of the polymer aqueous solution obtained in Production Example 1(1) and 54.7 parts of ion-exchanged water, and the contents of the container were stirred using a disper "ULTRA DISPER" (tradename) available from Asada Iron Works Co., Ltd., at 1400 rpm for 15 minutes while cooling in a water bath at 0°C.
(2) Next, 180 parts of a black pigment (C.I. Pigment Black 7), 16.91 parts of a crosslinking agent "DENACOL EX-212" (1,6-hexanediol diglycidyl ether; epoxy equivalent: 150; corresponding to 40 mol% on the basis of a carboxylic acid acting as a crosslinking reaction site contained in an acrylic acid moiety in the polymer) available from Nagase ChemteX Corporation and 0.82 part of "Ploxel LV(S)" (mildew-proof agent; active ingredient content: 20%) available from LONZA Japan K.K., were added to the container, and the contents of the container were stirred at 6400 rpm for 1 hour.
(3) The resulting dispersion liquid was subjected to the same dispersion and filtration treatments as those in Production Example 3(3), thereby obtaining 583.7 parts of a water dispersion A-4 of pigment-containing crosslinked polymer particles (solid content: 45.0%; pigment: 30.8%; polymer: 14.2%; average particle size: 200 nm).

Production Example 5 (Production of Pigment Dispersion A-5)

(1) A 2 L-capacity container equipped with a disper blade was charged with 226.1 parts of the polymer aqueous solution obtained in Production Example 1(1) and 155.1 parts of ion-exchanged water, and the contents of the container were stirred using a disper "ULTRA DISPER" (tradename) available from Asada Iron Works Co., Ltd., at 1400 rpm for 15 minutes while cooling in a water bath at 0°C.
(2) Next, 180 parts of a magenta pigment (C.I. Pigment Red 146), 82.71 parts of a crosslinking agent "CARBODILITE SV-02" (carbodiimide-based crosslinking agent; NCN equivalent (chemical formula weight per 1 mol of the carbodiimide group): 430; solid content: 40%; corresponding to 40 mol% on the basis of a carboxylic acid acting as a crosslinking reaction site contained in an acrylic acid moiety in the polymer) available from Nisshinbo Chemical Inc., and 0.82 part of "Ploxel LV(S)" (mildew-proof agent; active ingredient content: 20%) available from LONZA Japan K.K., were added to the container, and the contents of the container were stirred at 6400 rpm for 1 hour.
(3) The resulting dispersion liquid was subjected to the same dispersion and filtration treatments as those in Production Example 3(3), thereby obtaining 644.7 parts of a water dispersion A-5 of pigment-containing crosslinked polymer particles (solid content: 40.0%; pigment: 27.9%; polymer: 12.1%; average particle size: 230 nm).

Production Example 6 (Production of Pigment Dispersion A-6)

(1) A 2 L-capacity container equipped with a disper blade was charged with 226.1 parts of the polymer aqueous solution obtained in Production Example 1(1) and 153.0 parts of ion-exchanged water, and the contents of the container were stirred using a disper "ULTRA DISPER" (tradename) available from Asada Iron Works Co., Ltd., at 1400 rpm for 15 minutes while cooling in a water bath at 0°C.
(2) Next, 180 parts of a black pigment (C.I. Pigment Black 7), 82.26 parts of a crosslinking agent "EPOCROS WS-500" (oxazoline-based crosslinking agent; oxazoline group content: 4.5 (mmol/g; solid); solid content: 39%; corresponding to 40 mol% on the basis of a carboxylic acid acting as a crosslinking reaction site contained in an acrylic acid moiety in the polymer) available from Nippon Shokubai Co., Ltd., and 0.82 part of "Ploxel LV(S)" (mildew-proof agent; active ingredient content: 20%) available from LONZA Japan K.K., were added to the container, and the contents of the container were stirred at 6400 rpm for 1 hour.
(3) The resulting dispersion liquid was subjected to the same dispersion and filtration treatments as those in Production Example 3(3), thereby obtaining 642.2 parts of a water dispersion A-6 of pigment-containing crosslinked polymer particles (solid content: 40.0%; pigment: 28.0%; polymer: 12.0%; average particle size: 280 nm).

Production Example 7 (Production of Pigment Water Dispersion A-7)

(1) A 2 L-capacity container equipped with a disper blade was charged with 331.7 parts of the polymer aqueous solution obtained in Production Example 1(1) and 150.35 parts of ion-exchanged water, and the contents of the container were stirred using a disper "ULTRA DISPER" (tradename) available from Asada Iron Works Co., Ltd., at 1400 rpm for 15 minutes while cooling in a water bath at 0°C.

(2) Next, 200 parts of a magenta pigment (C.I. Pigment Red 146) were added to the container, and the subsequent procedure was conducted in the same manner as in Production Example 1(2), thereby obtaining a filtrate.

(3) Five hundred parts of the filtrate obtained in the above (2) (pigment: 150.0 parts; polymer: 45.0 parts) were mixed with 1.1 parts of "Ploxel LV(S)" (mildew-proof agent; active ingredient content: 20%) available from LONZA Japan K.K., followed by further adding 72.4 parts of ion-exchanged water to the resulting mixture. The obtained dispersion was stirred at 70°C for 3 hours, and then subjected to filtration treatment through a 200-mesh wire screen, thereby obtaining 573.5 parts of a water dispersion A-7 of pigment-containing polymer particles (solid content: 34.0%; pigment: 26.2%; polymer: 7.8%; average particle size: 280 nm).

Production Example 8 (Production of Water Dispersion Liquid of Pigment-Free Water-Insoluble Polymer Particles B1)

A reaction vessel equipped with a dropping funnel was charged with 0.5 part of methacrylic acid, 14.5 parts of methyl methacrylate available from FUJIFILM Wako Pure Chemical Corporation, 5.0 parts of 2-ethylhexyl acrylate available from FUJIFILM Wako Pure Chemical Corporation, 11.1 parts of "LATEMUL E-118B" (sodium polyoxyethylenealkylethersulfate) as a surfactant available from Kao Corporation, 0.2 part of potassium persulfate as a polymerization initiator available from FUJIFILM Wako Pure Chemical Corporation and 282.8 parts of ion-exchanged water, followed by mixing the contents of the reaction vessel with each other at 150 rpm. Then, an inside atmosphere of the reaction vessel was replaced with nitrogen gas, thereby obtaining an initially charged monomer solution.

Then, 9.5 parts of methacrylic acid, 275.5 parts of methyl methacrylate, 95.0 parts of 2-ethylhexyl acrylate, 35.1 parts of "LATEMUL E-118B", 0.6 part of potassium persulfate and 183.0 parts of ion-exchanged water were mixed with each other at 150 rpm to prepare a dropping monomer solution. The resulting dropping monomer solution was charged into the dropping funnel, and an inside atmosphere of the dropping funnel was replaced with nitrogen gas.

In a nitrogen atmosphere, the initially charged monomer solution in the reaction vessel was heated from room temperature to 80°C over 30 minutes while stirring at 150 rpm, and while maintaining the initially charged monomer solution at 80°C, the monomers in the dropping funnel were gradually added dropwise to the reaction vessel over 3 hours. After completion of the dropwise addition, while maintaining the inside temperature of the reaction vessel, the resulting mixed solution in the reaction vessel was stirred for 1 hour, and mixed with 204.7 parts of ion-exchanged water. Then, the resulting dispersion was filtered through a stainless steel wire mesh screen (200 mesh), thereby obtaining a water dispersion of water-insoluble polymer particles B1 (solid content: 40%; average particle size: 100 nm).

The polymer b1 constituting the thus obtained polymer particles B1 had an acid value of 16 mgKOH/g and Tg of 48°C.

<Preparation of Aqueous Inks for Gravure Printing>

Example 1 (Preparation of Aqueous Ink 1)

A reaction container was charged with 38.18 parts of the pigment water dispersion A-1 obtained in Production Example 1 (corresponding to a pigment concentration of 9.5% in the ink) and 26.25 parts of an emulsion containing polyether-based polyurethane resin particles "NeoRez R-650" (tradename; active ingredient content: 38.1%; containing 1.0% of triethylamine) available from DSM NeoResins Inc., (corresponding to a concentration of 10% in the ink) so as to prepare the ink composition shown in Table 1, followed by stirring the contents of the reaction container at 150 rpm.

Moreover, 7 parts of diethylene glycol monoisobutyl ether, 0.5 part of a silicone-based surfactant "KF-6011" (tradename; PEG-11 methyl ether dimethicone; kinematic viscosity at 25°C: 130 $mm^2$/s; HLB: 12) available from Shin-Etsu Chemical Co., Ltd., 2.0 parts of an acetylene glycol-based surfactant "SURFYNOL 104PG50" (tradename; 2,4,7,9-tetramethyl-5-decyne-4,7-diol; active ingredient content: 50%; propylene glycol solution) available from Nissin Chemical Co., Ltd., 1.1 parts of a thickening agent "ADEKANOL UH-420" (tradename; aqueous solution having an active ingredient content of 30%) available from ADEKA Corporation, and 24.7 parts of ion-exchanged water were added to the reaction container, followed by stirring the contents of the reaction container at room temperature for 30 minutes. Then, the resulting dispersion was subjected to filtration treatment through a stainless steel wire mesh screen (200 mesh), thereby obtaining an aqueous ink 1.

The composition of the aqueous ink 1 is shown in Table 1. Incidentally, the amounts of the respective components shown in Table 1 represent amounts in terms of active ingredient contents thereof.

Examples 2 to 12 and Comparative Examples 1 to 4 (Preparation of Aqueous Inks 2 to 12 and 13 to 16)

The same procedure as in Example 1 was repeated except that the composition of the ink was changed to those shown in Table 1, thereby preparing aqueous inks 2 to 12 and 13 to 16. Example 6 is a Reference Example.
The details of the respective components shown in Table 1 are as follows.

(Water-Soluble Organic Solvent)

- iBDG: Diethylene glycol monoisobutyl ether (boiling point: 220°C) available from FUJIFILM Wako Pure Chemical Corporation
- iPG: Ethylene glycol monoisopropyl ether (boiling point: 142°C) available from FUJIFILM Wako Pure Chemical Corporation
- IPA: Isopropyl alcohol (boiling point: 83°C) available from FUJIFILM Wako Pure Chemical Corporation
- BTG: Triethylene glycol monobutyl ether (boiling point: 271°C) available from FUJIFILM Wako Pure Chemical Corporation

(Neutralizing Agent)

- TEA: Triethylamine available from FUJIFILM Wako Pure Chemical Corporation
- DMAE: Dimethylaminoethanol (N,N-dimethylethanolamine) available from FUJIFILM Wako Pure Chemical Corporation
- NaOH: Sodium hydroxide available from FUJIFILM Wako Pure Chemical Corporation.

Gravure printing was conducted as follows using the respective aqueous inks obtained in the aforementioned Examples and Comparative Examples to evaluate properties of the inks. The results are shown in Table 1.

<Printing Test>

Using the respective inks obtained in the aforementioned Examples and Comparative Examples, printing was conducted on a corona discharge-treated surface of a PET film "FE2001 #12" (laminate grade) available from Futamura Chemical Co, Ltd.
Upon the printing operation, gradation printing was conducted using a bench-top gravure printing tester "K PRINTING PROOFER" available from MATSUO SANGYO Co., Ltd., equipped with a plate having 250 gravure screen lines and a cell depth of 8 μm available from Nabe Process Corporation as a gravure printing plate manufactured by a laser platemaking method. The resulting printed material was successively dried within a dryer set to 60°C "Drying Oven DSV402" available from Yamato Scientific Co., Ltd., for 10 minutes.

<Evaluation of Transfer Properties>

The 10% dot portion of the resulting printed material was cut to a size of 10 mm x 10 mm, and magnified with a magnifier "Peak Loupe 10x" available from TOUKAISANGYO Co., Ltd., to count the number of missing dots untransferred and thereby evaluate transfer properties of the ink according to the following evaluation ratings.
When the evaluating rating was A or B, the ink was excellent in transfer properties and could be used without problems in the practical applications.

(Evaluation Ratings)

A: Less than 5;
B: Not less than 5 and less than 10: and

C: Not less than 10.

<Evaluation of Substrate Adhesion Properties>

A cellophane tape (12 mm in width) available from Nichiban Co., Ltd., was attached onto a 100% dot portion (solid image portion) of the resulting printed material, and strongly bonded thereto by rubbing it with fingers. Then, the tape was peeled off from the solid image portion of the printed material to examine the condition of the ink peeled therefrom and thereby evaluate substrate adhesion properties of the ink according to the following evaluation ratings.
When the evaluating rating was A or B, the ink was excellent in substrate adhesion properties and could be used without problems in the practical applications.

(Evaluation Ratings)

A: No peeling of the ink occurred;
B: Less than 20% of the tape-attached image portion suffered from peeling of the ink.
C: Not less than 20% of the tape-attached image portion suffered from peeling of the ink.

TABLE 1-1

| | | | Examples | | | | | | | |
|---|---|---|---|---|---|---|---|---|---|---|
| | | | 1 | 2 | 3 | 4 | 5 | 6 (Ref) | 7 | 8 |
| Kind of aqueous ink | | | 1 | 2 | 3 | 4 | 5 | 6 | 7 | 8 |
| Kind of water dispersion of pigment-containing crosslinked polymer particles | | | A-1 | A-1 | A-2 | A-2 | A-1 | A-1 | A-1 | A-1 |
| Composition of aqueous ink (%) | Pigment | | 9.5 | 9.5 | 9.5 | 9.5 | 9.5 | 9.5 | 9.5 | 9.5 |
| | Crosslinked polymer a2 | | 3.48 | 3.48 | 2.21 | 2.21 | 3.48 | 3.48 | 3.48 | 3.48 |
| | Polymer b (triethylamine-neutralized product) | | 10 | 15 | 12 | 15 | | | 10 | 10 |
| | Water-insoluble polymer particles B1 | | | | | | 10 | 10 | | |
| | Organic solvent | iBDG (boiling point: 220°C) | 7 | 7 | 7 | 7 | 7 | 7 | 3 | |
| | | iPG (boiling point: 142°C) | | | | | | | | 7 |
| | | IPA (boiling point: 83°C) | | | | | | | | |
| | | BTG (boiling point: 271°C) | | | | | | | | |
| | Neutralizing agent | TEA | | | | | 0.05 | | | |
| | | DMAE | | | | | | 0.05 | | |
| | | NaOH | | | | | | | | |
| | Others | Acetylene glycol-based surfactant | 1.0 | 1.0 | 1.0 | 1.0 | 1.0 | 1.0 | 1.0 | 1.0 |
| | | Silicone-based surfactant | 0.5 | 0.5 | 0.5 | 0.5 | 0.5 | 0.5 | 0.5 | 0.5 |
| | | Thickening agent | 0.33 | 0.15 | 0.28 | 0.15 | 0.60 | 0.60 | 0.38 | 0.35 |
| | | Ion-exchanged water | Bal.** | Bal.** | Bal.** | Bal.** | Bal.** | Bal.** | Bal.** | Bal.** |
| Mass ratio (b or B1/pigment-containing crosslinked polymer particles) | | | 0.77 | 1.16 | 1.02 | 1.28 | 0.77 | 0.77 | 0.77 | 0.77 |
| Mass ratio (polymer/pigment) | | | 1.42 | 1.95 | 1.50 | 1.81 | 1.42 | 1.42 | 1.42 | 1.42 |
| Organic amine compound (%) | | | 0.26 | 0.39 | 0.32 | 0.26 | 0.05 | 0.05 | 0.26 | 0.26 |
| Evaluation | Transfer properties (number of missing dots) | | A | A | A | B | A | A | B | A |
| | Substrate adhesion properties | | B | A | A | A | B | B | A | A |
| Note: **: Balance | | | | | | | | | | |

EP 3 875 551 B1

24

TABLE 1-2

| | | | Examples | | | | Comparative Examples | | | |
|---|---|---|---|---|---|---|---|---|---|---|
| | | | 9 | 10 | 11 | 12 | 1 | 2 | 3 | 4 |
| Kind of aqueous ink | | | 9 | 10 | 11 | 12 | 13 | 14 | 15 | 16 |
| Kind of water dispersion of pigment-containing crosslinked polymer particles | | | A-3 | A-4 | A-5 | A-6 | A-7 | A-1 | A-1 | A-1 |
| Composition of aqueous ink (%) | Pigment | | 9.5 | 9.5 | 9.5 | 9.5 | 9.5 | 9.5 | 9.5 | 9.5 |
| | Crosslinked polymer a2 | | 4.25 | 4.38 | 4.12 | 4.07 | 2.85*1 | 3.48 | 3.48 | 3.48 |
| | Polymer b (triethylamine-neutralized product) | | 12 | 12 | 12 | 12 | 10 | | 10 | 10 |
| | Water-insoluble polymer particles B1 | | | | | | | 10 | | |
| | Organic solvent | iBDG (boiling point: 220°C) | 7 | 7 | 7 | 7 | 7 | 7 | | |
| | | iPG (boiling point: 142°C) | | | | | | | | |
| | | IPA (boiling point: 83°C) | | | | | | | 7 | |
| | | BTG (boiling point: 271°C) | | | | | | | | 7 |
| | Neutralizing agent | TEA | | | | | | | | |
| | | DMAE | | | | | | | | |
| | | NaOH | | | | | | 0.05 | | |
| | Others | Acetylene glycol-based surfactant | 1.0 | 1.0 | 1.0 | 1.0 | 1.0 | 1.0 | 1.0 | 1.0 |
| | | Silicone-based surfactant | 0.5 | 0.5 | 0.5 | 0.5 | 0.5 | 0.5 | 0.5 | 0.5 |
| | | Thickening agent | 0.15 | 0.15 | 0.15 | 0.15 | 0.30 | 0.60 | 0.33 | 0.33 |
| | | Ion-exchanged water | Bal.** | Bal.** | Bal.** | Bal.** | Bal.** | Bal.** | Bal.** | Bal.** |
| Mass ratio (b or B1/pigment-containing crosslinked polymer particles) | | | 0.87 | 0.86 | 0.88 | 0.88 | 0.81 | 0.77 | 0.77 | 0.77 |
| Mass ratio (polymer/pigment) | | | 1.71 | 1.72 | 1.70 | 1.69 | 1.35 | 1.42 | 1.42 | 1.42 |
| Organic amine compound (%) | | | 0.32 | 0.32 | 0.32 | 0.32 | 0.26 | 0 | 0.26 | 0.26 |
| Evaluation | Transfer properties (number of missing dots) | | A | A | B | B | C | A | C | B |
| | Substrate adhesion properties | | A | A | A | A | C | C | A | C |
| Note: *1: Uncrosslinked polymer; **: Balance | | | | | | | | | | |

EP 3 875 551 B1

From the results shown in Table 1, it was confirmed that the aqueous inks obtained in the Examples were excellent in transfer properties and substrate adhesion properties upon plate-based printing, as compared to the aqueous inks obtained in the Comparative Examples.

Industrial Applicability

The aqueous ink for plate-based printing according to the present invention is excellent in transfer properties and substrate adhesion properties even when printed on a low-liquid absorbing printing medium, and therefore can be suitably used for plate-based printing, in particular, for gravure printing.

**Claims**

1. An aqueous ink for plate-based printing, comprising pigment-containing crosslinked water-insoluble polymer particles A, pigment-free water-insoluble polymer particles B, an organic amine compound, not less than 1% by mass and not more than 30% by mass of a water-soluble organic solvent having a boiling point of not lower than 100°C and not higher than 260°C, and water, wherein the organic amine compound is at least a trialkylamine having not less than 3 and not more than 8 carbon atoms.

2. The aqueous ink for plate-based printing according to claim 1, wherein the organic amine compound is at least triethylamine.

3. The aqueous ink for plate-based printing according to claim 1 or 2, wherein the water-soluble organic solvent is a glycol ether.

4. The aqueous ink for plate-based printing according to claim 3, wherein the glycol ether is at least one compound selected from the group consisting of an alkylene glycol monoalkyl ether and an alkylene glycol dialkyl ether.

5. The aqueous ink for plate-based printing according to claim 4, wherein the alkylene glycol monoalkyl ether is at least one compound selected from the group consisting of ethylene glycol monoisopropyl ether, ethylene glycol monopropyl ether, diethylene glycol monomethyl ether, diethylene glycol monoisopropyl ether, diethylene glycol monoisobutyl ether and diethylene glycol monobutyl ether.

6. The aqueous ink for plate-based printing according to any one of claims 1 to 5, wherein a mass ratio of the pigment-free water-insoluble polymer particles B to the pigment-containing crosslinked water-insoluble polymer particles A [pigment-free water-insoluble polymer particles B/pigment-containing crosslinked water-insoluble polymer particles A] is not less than 0.2 and not more than 2.

7. The aqueous ink for plate-based printing according to any one of claims 1 to 6, further comprising a surfactant.

8. The aqueous ink for plate-based printing according to claim 7, wherein the surfactant comprises at least one surfactant selected from the group consisting of an acetylene glycol-based surfactant and a silicone-based surfactant.

9. The aqueous ink for plate-based printing according to any one of claims 1 to 8, wherein the pigment-containing crosslinked water-insoluble polymer particles A are obtained by crosslinking pigment-containing polymer particles A1 with a polyfunctional epoxy compound.

10. The aqueous ink for plate-based printing according to claim 9, wherein a crosslinking rate of the pigment-containing polymer particles A1 is not less than 10 mol% and not more then 80 mol%.

11. The aqueous ink for plate-based printing according to any one of claims 1 to 10, wherein the aqueous ink is used for gravure printing.

12. A plate-based printing method comprising the step of printing characters or images on a low-liquid absorbing printing medium using the aqueous ink according to any one of claims 1 to 11.

13. A use of the aqueous ink according to any one of claims 1 to 11 as an ink for plate-based printing.

**14.** The use of the aqueous ink according to claim 13, wherein the plate-based printing is gravure printing.

**Patentansprüche**

**1.** Wässrige Tinte für den Plattendruck, umfassend pigmenthaltige vernetzte wasserunlösliche Polymerpartikel A, pigmentfreie wasserunlösliche Polymerpartikel B, eine organische Aminverbindung, nicht weniger als 1 Massen-% und nicht mehr als 30 Massen-% eines wasserlöslichen organischen Lösungsmittels mit einem Siedepunkt von nicht weniger als 100°C und nicht mehr als 260°C und Wasser,
wobei die organische Aminverbindung mindestens ein Trialkylamin mit nicht weniger als 3 und nicht mehr als 8 Kohlenstoffatomen ist.

**2.** Wässrige Tinte für den Plattendruck gemäß Anspruch 1, wobei die organische Aminverbindung mindestens Triethylamin ist.

**3.** Wässrige Tinte für den Plattendruck gemäß Anspruch 1 oder 2, wobei das wasserlösliche organische Lösungsmittel ein Glycolether ist.

**4.** Wässrige Tinte für den Plattendruck gemäß Anspruch 3, wobei der Glycolether mindestens eine Verbindung ist, die aus der Gruppe ausgewählt ist, die aus einem Alkylenglycolmonoalkylether und einem Alkylenglycoldialkylether besteht.

**5.** Wässrige Tinte für den Plattendruck gemäß Anspruch 4, wobei der Alkylenglycolmonoalkylether mindestens eine Verbindung ist, die aus der Gruppe ausgewählt ist, die aus Ethylenglycolmonoisopropylether, Ethylenglycolmono-propylether, Diethylenglycolmonomethylether, Diethylenglycolmonoisopropylether, Diethylenglycolmonoisobutyle-ther und Diethylenglycolmonobutylether besteht.

**6.** Wässrige Tinte für den Plattendruck gemäß einem der Ansprüche 1 bis 5, wobei ein Massenverhältnis von den pigmentfreien wasserunlöslichen Polymerpartikeln B zu den pigmenthaltigen vernetzten wasserunlöslichen Polymerpartikeln A [pigmentfreie wasserunlösliche Polymerpartikel B/pigmenthaltige vernetzte wasserunlösliche Polymerpartikel A] nicht weniger als 0,2 und nicht mehr als 2 beträgt.

**7.** Wässrige Tinte für den Plattendruck gemäß einem der Ansprüche 1 bis 6, ferner umfassend ein Tensid.

**8.** Wässrige Tinte für den Plattendruck gemäß Anspruch 7, wobei das Tensid mindestens ein Tensid umfasst, das aus der Gruppe ausgewählt ist, die aus einem acetylenglycolbasierten Tensid und einem silikonbasierten Tensid besteht.

**9.** Wässrige Tinte für den Plattendruck gemäß einem der Ansprüche 1 bis 8, wobei die pigmenthaltigen vernetzten wasserunlöslichen Polymerpartikel A durch Vernetzen von pigmenthaltigen Polymerpartikel A1 mit einer polyfunktionellen Epoxidverbindung erhalten werden.

**10.** Wässrige Tinte für den Plattendruck gemäß Anspruch 9, wobei ein Vernetzungsgrad der pigmenthaltigen Polymerpartikel A1 nicht weniger als 10 Mol-% und nicht mehr als 80 Mol-% beträgt.

**11.** Wässrige Tinte für den Plattendruck gemäß einem der Ansprüche 1 bis 10, wobei die wässrige Tinte für den Tiefdruck verwendet wird.

**12.** Plattendruck-Verfahren, umfassend den Schritt des Druckens von Zeichen oder Bildern auf ein wenig Flüssigkeit absorbierendes Druckmedium unter Verwendung der wässrigen Tinte gemäß einem der Ansprüche 1 bis 11.

**13.** Verwendung der wässrigen Tinte gemäß einem der Ansprüche 1 bis 11 als Tinte für den Plattendruck.

**14.** Verwendung der wässrigen Tinte gemäß Anspruch 13, wobei der Plattendruck ein Tiefdruck ist.

**Revendications**

**1.** Encre aqueuse pour impression à la plaque, comprenant des particules polymères A réticulées insolubles dans l'eau contenant un pigment, des particules polymères B insolubles dans l'eau sans pigment, un composé d'amine organique, pas moins de 1 % en masse et pas plus de 30 % en masse d'un solvant organique hydrosoluble présentant un point d'ébullition non inférieur à 100 °C et non supérieur à 260 °C, et de l'eau, dans laquelle le composé d'amine organique est au moins une trialkylamine présentant pas moins de 3 et pas plus de 8 atomes de carbone.

2. Encre aqueuse pour impression à la plaque selon la revendication 1, dans laquelle le composé d'amine organique est au moins la triéthylamine.

3. Encre aqueuse pour impression à la plaque selon la revendication 1 ou la revendication 2, dans laquelle le solvant organique hydrosoluble est un éther de glycol.

4. Encre aqueuse pour impression à la plaque selon la revendication 3, dans laquelle l'éther de glycol est au moins un composé sélectionné dans le groupe consistant en un alkylène glycol monoalkyléther et un alkylène glycol dialkyléther.

5. Encre aqueuse pour impression à la plaque selon la revendication 4, dans laquelle l'alkylène glycol monoalkyléther est au moins un composé sélectionné dans le groupe consistant en l'éthylène glycol monoisopropyléther, l'éthylène glycol monopropyléther, le diéthylène glycol monométhyléther, le diéthylène glycol monoisopropyléther, le diéthylène glycol monoisobutyléther et le diéthylène glycol monobutyléther.

6. Encre aqueuse pour impression à la plaque selon l'une quelconque des revendications 1 à 5, dans laquelle un rapport en masse des particules polymères B insolubles dans l'eau sans pigment par rapport aux particules polymères A réticulées insolubles dans l'eau contenant un pigment [particules polymères B insolubles dans l'eau sans pigment/particules polymères A réticulées insolubles dans l'eau contenant un pigment] n'est pas inférieur à 0,2 et pas supérieur à 2.

7. Encre aqueuse pour impression à la plaque selon l'une quelconque des revendications 1 à 6, comprenant en outre un tensioactif.

8. Encre aqueuse pour impression à la plaque selon la revendication 7, dans laquelle le tensioactif comprend au moins un tensioactif sélectionné dans le groupe consistant en un tensioactif à base d'acétylène glycol et un tensioactif à base de silicone.

9. Encre aqueuse pour impression à la plaque selon l'une quelconque des revendications 1 à 8, dans laquelle les particules polymères A réticulées insolubles dans l'eau contenant un pigment sont obtenues par la réticulation de particules polymères A1 contenant un pigment avec un composé d'époxy polyfonctionnel.

10. Encre aqueuse pour impression à la plaque selon la revendication 9, dans laquelle le taux de réticulation des particules polymères A1 contenant un pigment n'est pas inférieur à 10 % en mole et n'est pas supérieur à 80 % en mole.

11. Encre aqueuse pour impression à la plaque selon l'une quelconque des revendications 1 à 10, dans laquelle l'encre aqueuse est utilisée pour une héliogravure.

12. Procédé d'impression à la plaque comprenant l'étape d'impression de caractères ou d'images sur un support d'impression à faible absorption de liquide en utilisant l'encre aqueuse selon l'une quelconque des revendications 1 à 11.

13. Utilisation de l'encre aqueuse selon l'une quelconque des revendications 1 à 11 comme encre pour impression à la plaque.

14. Utilisation de l'encre aqueuse selon la revendication 13, dans laquelle l'impression à la plaque est une héliogravure.

**EP 3 875 551 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016044282 A
- WO 201747267 A
- JP 2016210959 A
- JP 2018083938 A
- WO 2018173901 A1
- JP S5385606 A
- JP 2013166364 A
- JP 2015196789 A